Europäisches Patentamt

European Patent Office

Office européen des brevets

(19)

(11) **EP 1 635 601 A2**

(12) **EUROPÄISCHE PATENTANMELDUNG**

(43) Veröffentlichungstag:
**15.03.2006 Patentblatt 2006/11**

(51) Int Cl.:
*H04Q 7/38* (2006.01)   *H04Q 7/24* (2006.01)
*H04Q 11/04* (2006.01)

(21) Anmeldenummer: **05025926.6**

(22) Anmeldetag: **03.04.1997**

(84) Benannte Vertragsstaaten:
**AT BE CH DE ES FR GB IT LI NL SE**

(30) Priorität: **04.04.1996 DE 19613636**
**24.06.1996 DE 19625141**

(62) Dokumentnummer(n) der früheren Anmeldung(en)
nach Art. 76 EPÜ:
**97921602.5 / 0 891 681**

(71) Anmelder: **SIEMENS AKTIENGESELLSCHAFT**
**80333 München (DE)**

(72) Erfinder:
• **Flake, Horst**
  **82041 Oberhaching (DE)**
• **Kordsmeyer, Martin**
  **48477 Hörstel (DE)**

Bemerkungen:
Diese Anmeldung ist am 28 - 11 - 2005 als
Teilanmeldung zu der unter INID-Kode 62 erwähnten
Anmeldung eingereicht worden.

(54) **Kanalwechselsteuerung in einem ISDN-System eingebundenen DECT-spezifischen RLL/WLL-Teilsystem**

(57)   Um in einem Telekommunikationsteilsystem, das in einem Telekommunikationssystem als lokale Nachrichtenübertragungsschleife eingebunden ist - insbesondere eines in einem ISDN-System eingebundenen DECT-spezifischen RLL/WLL-Teilsystems - den durch die Übertragung von Systemnachrichten in der lokale Nachrichtenübertragungsschleife bedingten Wechsel von einem Telekommunikationskanal - z.B. den im DECT-Standard definierten $C_f$-Kanal - zu einem Telekommunikationskanal - z.B. den im DECT-Standard definierten $C_s$- Kanal- durch zwei Befehle, einen als Umschaltkommando ausgelegten ersten befehl und einen als Umschaltantwort ausgelegten zweiten Befehl, zu steuern, wird der Kanalwechsel vorzugsweise gezielt angestoßen.

FIG 6a

DECT Intermediate Fixed System DIFS

DECT Intermediate Portable System DIPS

Der Kanal $C_X$ wird für Informationsübertragungen auf der C-Ebene (C-plane) verwendet.

Kanal $C_X$
[Übertragungsweg mit LCNx; k=3]

Kanal $C_Y$
[Übertragungsweg mit LCNy; wobei LCNx+LCNy]

Der Kanal $C_X$ wird für Informationsübertragungen auf der C-Ebene (C-plane) verwendet.

Das DIFS erkennt die Notwendigkeit auf einen C-Kanal $C_Y$ zu wechseln.

Das DIFS kann mit der Meldung "RECEIVE_READY" alle unbestätigten, vollständig empfangenen I-Rahmen (Informationen nach dem HDLC-Protokoll) bestätigen, falls kein weiterer I-Rahmen gesendet wird.

RECEIVE_READY (RESPONSE)
[I-Rahmen; k=3]

Vor, mit oder nach der Übertragung der Meldung "SWITCHING_REQUEST" kann die DIFS vorzugsweise die Informationsübertragung auf der C-Ebene unterbrechen.

SWITCHING_REQUEST
[Anfrage von Kanal $C_X$ auf Kanal $C_Y$ zu wechseln]

Nach oder mit Erhalt der Meldung "SWITCHING_REQUEST" wird das DIPS vorzugsweise alle unvollständig empfangenen I-Rahmen löschen.

EP 1 635 601 A2

# FIG 6b

DECT Intermediate Fixed System DIFS  DECT Intermediate Portable System DIPS

Falls der Sender frei ist, kann das DIPS mit der Meldung "RECEIVE_READY" alle unbestätigten, vollständig empfangenen I-Rahmen (Informationen nach dem HDLC-Protokoll) bestätigen.

RECEIVE_READY (RESPONSE)
[I-Rahmen; k=3]

Das DIFS wird mit oder nach Erhalt der Meldung "SWITCHING_CONFIRM" vorzugsweise alle unbestätigten und unvollständig empfangenen I-Rahmen löschen.

SWITCHING_CONFIRM
[Bestätigung des Wechsels von Kanal $C_x$ auf Kanal $C_y$]

Das DIPS wird vorzugsweise alle Informationsübertragungen auf der C-Ebene unterbrechen und mit der Meldung "SWITCHING_CONFIRM" auf die Meldung "SWITCHING_REQUEST" im Sinne einer Bestätigung antworten.

Zurücksetzung von teilsystemspezifischen Parametern

Der Kanal $C_y$ wird für die Informationsübertragungen auf der C-Ebene verwendet.

Testnachricht [k=1; k=3]

Übertragung der gelöschten Informationen [k=1; k=3]

Der Kanal $C_y$ wird für die Informationsübertragungen auf der C-Ebene verwendet.

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen

1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrecke drahtgebunden ist oder auf der Basis von diversen Nachrichtenübertragungsverfahren FDMA (**F**requency Division **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al: "Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht

(1) in Form eines Bildes,
(2) als gesprochenes Wort,
(3) als geschriebenes Wort,
(4) als verschlüsseltes Wort oder Bild

übertragen werden. Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Verfahren zur Steuerung des Wechsels von Telekommunikationskanälen eines in einem Telekommunikationssystem als lokale Nachrichtenübertragungsschleife eingebundenen Telekommunikationsteilsystem - insbesondere eines in einem ISDN-System eingebundenen DECT-spezifischen RLL/WLL-Teilsystems (**Ra**dio **L**ocal **L**oop/**W**ireless Local Loop) - gemäß dem Oberbegriff des Patentanspruches 1.

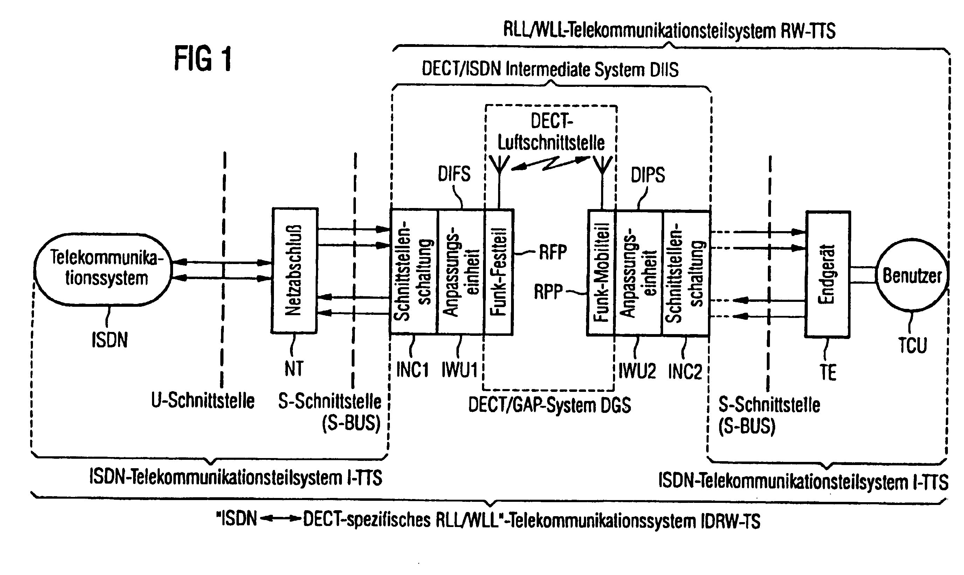

FIGUR 1 zeigt ausgehend von den Druckschriften "*Nachrichtentechnik Elektronik, Berlin 45* (1995) *Heft 1, Seiten 21 bis 23 und Heft 3 Seiten 29 und 30*" sowie *IEE Colloquium 1993, 173; (1993), Sei ten 29/1 - 29/7; W. Hing, F. Halsall : "Cordless access* to the *ISDN basic rate service*" auf der Basis eines **D**ECT/**I**SDN **I**ntermediate **S**ystems DIIS gemäß der *ETSI-Publikation prETS 300xxx, Version 1.10, September 1996* ein "**I**SDN ↔ **D**ECT-spezifisches **R**LL/**W**LL"-**T**elekommunikations**sy**-stem IDRW-TS (**I**ntegrated **S**ervices **D**igital **N**etwork ↔ **R**adio in the **L**ocal **L**oop/**W**ireless in the **L**ocal **L**oop) mit einem **I**SDN-**T**elekommunikations**t**eil**s**ystem I-TTS *[vgl. Druckschrift "Nachrichtentechnik Elektronik, Berlin 41-43, **T**eil: 1 bis 10, **T**1: (1991) Heft 3, Seiten 99 bis 102; **T**2: (1991) Heft 4, Seiten 138 bis 143; **T**3: (1991) Heft 5, Seiten 179 bis 182 und Heft 6, Seiten 219 bis 220; **T**4: (1991) Heft 6, Seiten 220 bis 222 und (1992) Heft 1, Seiten 19 bis 20; **T**5: (1992) Heft 2, Seiten 59 bis 62 und (1992) Heft 3, Seiten 99 bis 102; **T**6: (1992) Heft 4, Sei ten 150 bis 153; **T**7: (1992) Heft 6, Sei ten 238 bis 241; **T**8: (1993) Heft 1, Seiten 29 bis 33; **T**9: (1993) Heft 2, Seiten 95 bis 97 und (1993) Heft 3, Seiten 129 bis 135; **T**10: (1993) Heft 4, Seiten 187 bis 190;"]* und einem DECT-spezifischen **R**LL/**W**LL-**T**elekommunikations**t**eil-**s**ystem RW-TTS.

Das DECT/ISDN Intermediate System DIIS bzw. das RLL/WLL-Telekommunikationsteilsystem RW-TTS basiert dabei vorzugsweise auf ein DECT/GAP-System DGS [**D**igital **E**nhanced (früher: **E**uropean) **C**ordless **T**elecommunication; vgl. **(1)**: Nachrichtentechnik Elektronik 42 (1992) Jan./Feb. Nr. 1, Berlin, DE; U. Pilger "Struktur des DECT-Standards", Seiten 23 bis 29 **in Verbindung mit** der ETSI-Publikation ETS 300175-1...9, Okt. 1992; **(2):** Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3)**: tec 2/93 - Das technische Magazin von Ascom "Wege zur universellen mobilen Telekommunikation", Seiten 35 bis 42; **(4)**: Philips Telecommunication Review Vol. 49, No. 3, Sept. 1991, R.J. Mulder:" DECT, a universal cordless access system"; **(5)**: WO 93/21719 (FIG 1 bis 3 mit dazugehöriger Beschreibung)]. Der GAP-Standard (**G**eneric **A**ccess **P**rofile) ist eine Untermenge des DECT-Standards, dem die Aufgabe zukommt, die Interoperabilität der DECT-Luftschnittstelle für Telefonanwendungen sicherzustellen *(vgl. ETSI-Publikation prETS 300444, April 1995).*

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal System for Mobile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152). Stattdessen ist es im Rahmen eines hybriden Telekommunikationssystems auch möglich, dass das ISDN-Telekommunikationsteilsystem I-TTS als GSM-System ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z.B. DECT-Kanälen) in klassischen leitungsgebundenen Telekommunikationssystemen, wie dem ISDN, gewinnt zunehmend an Bedeutung, insbesondere vor dem Hintergrund zukünftiger alternativer Netzbetreiber ohne eigenes komplettes Drahtnetz.

So sollen z.B. bei dem RLL/WLL-Telekommunikationsteilsystems RW-TTS die drahtlose Anschlusstechnik RLL/WLL (**R**adio in the **L**ocal **L**oop/**W**ireless in the **L**ocal **L**oop) z.B. unter der Einbindung des DECT-System DS dem ISDN-Teilnehmer ISDN-Dienste an Standard-ISDN-Schnittstellen verfügbar gemacht werden (vgl. FIGUR 1).

In dem "ISDN ↔ DECT-spezifisches RLL/WLL"-Telekommunikationssystem IDRW-TS nach FIGUR 1 ist ein Telekommunikationsteilnehmer (Benutzer) TCU (**T**ele-**C**ommunication **U**ser) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystem RW-TTS enthaltene- DECT/ISDN Intermediate System DIIS (erstes Telekommunikationsteilsystem), eine weitere standardisierte S-Schnittstelle (S-BUS), einen Netzabschluss NT (**N**etwork **T**ermination) und eine standardisierte U-Schnittstelle des ISDN-Telekommunikationsteilsystems I-TTS (zweites Telekommunikationsteilsystem) in die ISDN-Welt mit den darin verfügbaren Diensten eingebunden.

Das erste Telekommunikationsteilsystem DIIS besteht im Wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das erste Telekommunikationsteilsystem DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter-**W**orking **U**nit) und eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

Für ein DECT-spezifisches RLL-System als Träger für möglichst alle ISDN-Dienste im Teilnehmer-Anschluss bestehen dabei folgende allgemeinen Problemstellungen:

a) Nachbildung der ISDN-Kanal-Struktur (D-Kanal und 2 B-Kanäle), im Folgenden insbesondere des D-Kanals,
b) gute Bandbreite-Ökonomie; für ISDN besonders bedeutsam, da einige Dienste bereits zwei DECT-Kanäle für die B-Kanal-Datenrate von 64 kbps benötigen,
c) minimaler technischer Aufwand.

Nachbildung des D-Kanals

Eigenschaften des D-Kanals:

- Gemeinsamer Signalisierungskanal auf der C-Ebene (C-plane) für alle an den ISDN-Anschluss angeschlossenen Endgeräte TE (**T**erminal **E**ndpoint).
- Die TE-spezifischen Signalisierungskanäle zum Netz werden darin durch TE-individuelle Adressen TEI (**T**erminal **E**ndpoint Identifier) separiert. Der Zugriffsmechanismus zum D-Kanal stellt TE-individuell die Reihenfolge der Nachrichten sicher.
- Durchsatzrate: 16 kbps
- Auslastung: abhängig von vielen Kriterien, in der Regel niedriger als Maximalkapazität; Stausituationen möglich, die jedoch wegen der hohen Kapazität schnell abbaubar sind.

DECT-Kanäle:

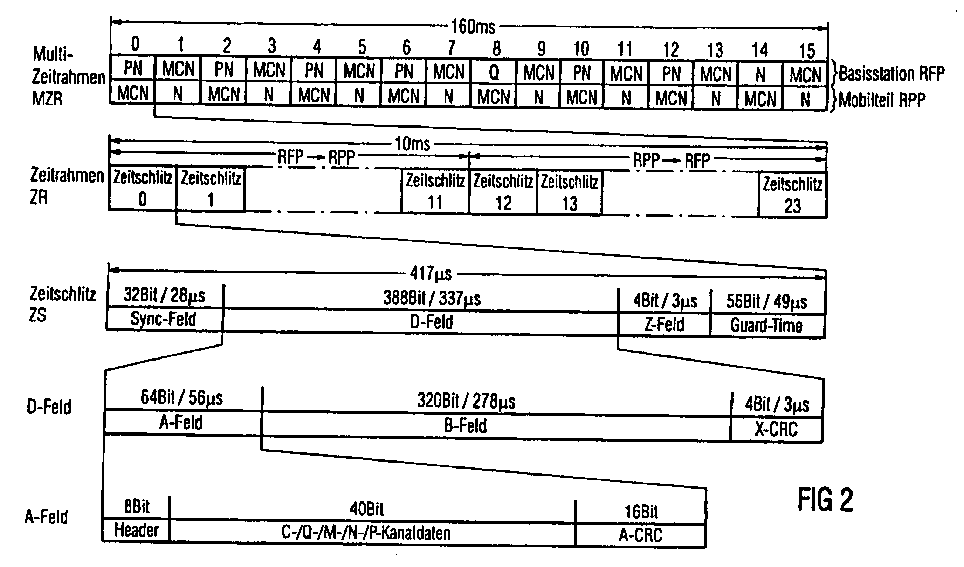

FIGUR 2 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems TKS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,90 GHz Funknachrichten nach dem TDMA-Prinzip gemäß FIGUR 2 in einer vorgegebenen zeitlichen Abfolge von der Basisstation RFP zum Mobilteil RPP und vom Mobilteil RPP zur Basisstation RFP (Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation RFP und Mobilteil RPP getrennt Informationen übertragen, die einen im DECT-Standard definierten C-,M-,N-, P-,Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 $\mu$s, von denen 12 Zeitschlitze ZS (Zeitschlitze 0 ... 11) für die Übertragungsrichtung "Basisstation RFP $\rightarrow$ Mobilteil RPP" und weitere 12 Zeitschlitze ZS (Zeitschlitze 12 ... 23) für die Übertragungsrichtung "Mobilteil RPP $\rightarrow$ Basisstation RFP" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

Eigenschaften:

- Verwendung von TDMA-Zeitschlitzen.
- Im Prinzip wird je Zeitschlitz ein $C_s$-Kanal (s = slow) zur Signalisierung [C-Ebene (C-plane) im DECT-Standard] und ein zugeordneter Kanal [U-Ebene (U-plane) im DECT-Standard] für die Benutzer- bzw. Nutzinformationen (Durchsatz: 32 kbps) verwendet.
- Durchsatz des $C_s$-Kanals: 2 kbps.
  Der DECT-Standard bietet auch andere Kanalstrukturen, z. B. einen $C_f$-Kanal (f = fast) an.
- Der $C_f$-Kanal belegt einen Zeitschlitz.
- Durchsatz des $C_f$-Kanals: 25.6 kbps.

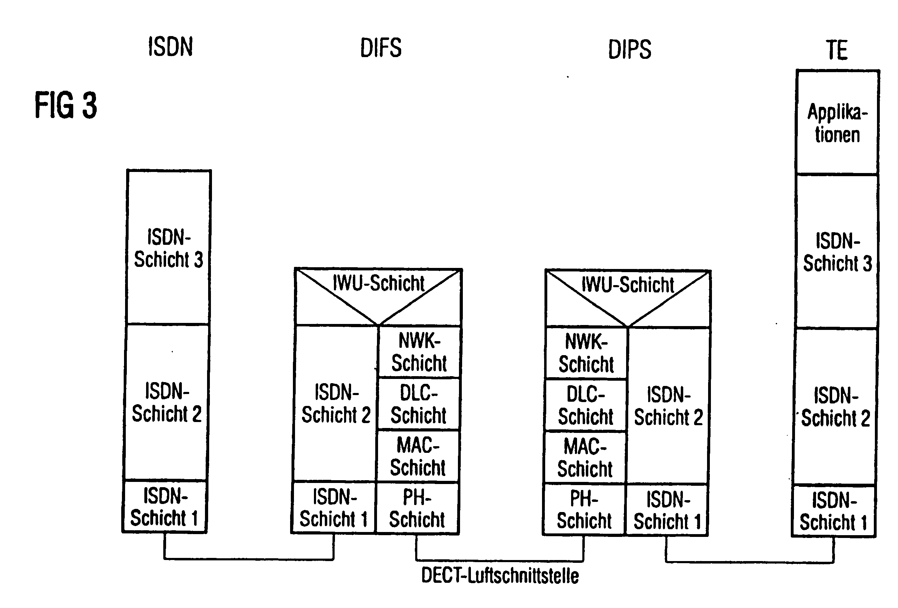

Figur 3 zeigt auf der Basis des OSI/ISO-Schichtenmodells [vgl. **(1):** Unterrichtsblätter - Deutsche Telekom Jg. 48, 2/1995, Seiten 102 bis 111; **(2):** ETSI-Publikation ETS 300175-1..9, Oktober 1992; **(3):** ETSI-Publikation ETS 300102, Februar 1992; **(4):** ETSI-Publikation ETS 300125, September 1991; **(5):** ETSI-Publikation ETS 300012, April 1992] ein Modell der C-Ebene des "ISDN $\leftrightarrow$ DECT-spezifischen RLL/WLL"-Telekommunikationssystems IDRW-TS nach FIGUR 1.

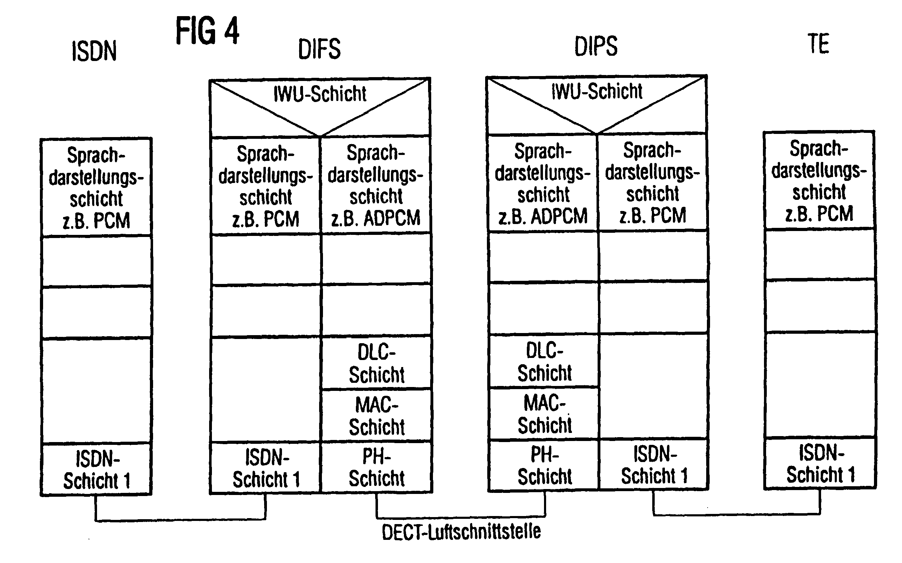

Figur 4 zeigt auf der Basis des OSI/ISO-Schichtenmodells [vgl. **(1):** Unterrichtsblätter - Deutsche Telekom Jg. 48, 2/1995, Seiten 102 bis 111; **(2):** ETSI-Publikation ETS 300175-1..9, Oktober 1992; **(3):** ETSI-Publikation ETS 300102, Februar 1992; **(4):** ETSI-Publikation ETS 300125, September 1991; **(5):** ETSI-Publikation ETS 300012, April 1992] ein Modell der U-Ebene für Sprachdatenübertragung des "ISDN $\leftrightarrow$ DECT-spezifischen RLL/WLL"-Telekommunikationssystems IDRW-TS nach FIGUR 1.

Bandbreite-Ökonomie

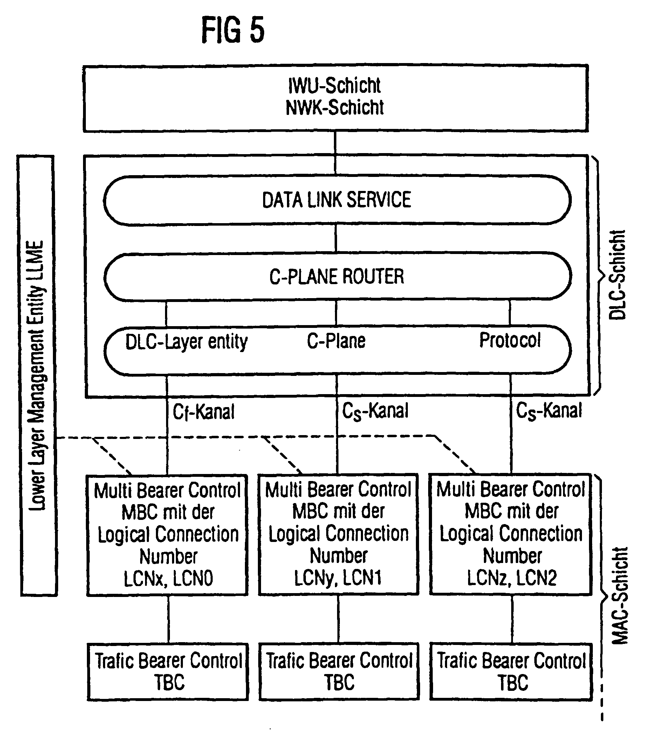

Die $C_s$-Kanalstruktur bietet für eine Standard-Sprachverbindung eine optimale Bandbreite-Ökonomie, da gemäß FIGUR 5 ausgehend von FIGUR 3 und 4 sowie unter Berücksichtigung der ETSI-Publikationen (ETS 300175-1, 10/1992, Kap. 7; ETS 300175-3, 10/1992, Kap. 4.1; ETS 300175-4, 10/1992, Kap. 4) nur ein Übertragungsweg (Bearer) - z.B. MBC mit der LCNy, LCN1 nach FIGUR 5 - bzw. eine Verbindung oder ein Zeitschlitz benötigt wird.

Die Verwendung des $C_f$-Kanals führt gemäß FIGUR 5 ausgehend von FIGUR 3 und 4 sowie unter Berücksichtigung der ETSI-Publikationen (ETS 300175-1, 10/1992, Kap. 7; ETS 300175-3, 10/1992, Kap. 4.1; ETS 300175-4, 10/1992, Kap. 4) zu einer geringerer Bandbreite-Ökonomie, da die U-Ebene (U-plane) selbst einen weiteren Übertragungsweg (Bearer) bzw. eine weitere Verbindung oder einen weiteren Zeitschlitz benötigt; d.h. es sind zwei Übertragungswege (Bearer) - z.B. MBC mit der LCN2,LCNz und MBC mit der LCNy, LCN1 nach FIGUR 5 - bzw. zwei Verbindung oder zwei Zeitschlitze für eine einfache Sprachverbindung notwendig.

Darüber hinaus sind für den Fall, dass zwei ISDN-B-Kanal-Verbindungen (Sprachverbindungen) bestehen, drei Übertragungswege (Bearer) - z.B. MBC mit der LCNx, LCN0, MBC mit der LCNy, LCN1 und MBC mit der LCNz, LCN2 nach FIGUR 5 - bzw. drei Verbindung oder drei Zeitschlitze erforderlich.

Während aus der Sicht der Kanalkapazität die Verwendung des $C_f$-Kanals zweckmäßig zu sein scheint, ist aus der Sicht der Bandbreite-Ökonomie die Verwendung des $C_s$-Kanals zweckmäßig.

Unabhängig davon, ob der $C_f$-Kanal oder der $C_s$-Kanal für den Verbindungsaufbau (Aufbau von Übertragungswegen) verwendet wird, muss es sichergestellt sein (vgl. FIGUR 5), dass zu jeder Zeit vom $C_f$-Kanal zum $C_s$-Kanal und umgekehrt gewechselt werden kann (Kanalwechsel zwischen Kanälen ungleicher Kanalkapazität). Darüber hinaus muss es aufgrund der Möglichkeit, dass im ISDN-System zwei Verbindungen (Übertragungswege) gleichzeitig aufgebaut werden können (2 B-Kanäle), sichergestellt sein, dass zwischen einem ersten $C_s$-Kanal und einem zweiten $C_s$-Kanal gewechselt werden kann (Kanalwechsel zwischen zwei Kanälen gleicher Kanalkapazität).

Die der Erfindung zugrundeliegende Aufgabe besteht darin, in einem Telekommunikationsteilsystem, das in einem Telekommunikationssystem als lokale Nachrichtenübertragungsschleife eingebunden ist - insbesondere eines in einem ISDN-System eingebundenen DECT-spezifischen RLL/WLL-Teilsystems - durch die Übertragung von Systeminformationen in der lokale Nachrichtenübertragungsschleife bedingte Wechsel von einem Telekommunikationskanal zu einem anderen Telekommunikationskanal ohne jeglichen Einfluss auf in dem Telekommunikationsteilsystem gewöhnlich übertragene Teilsysteminformationen auf einfache Weise zu steuern.

Diese Aufgabe wird ausgehend von dem im Oberbegriff des Patentanspruches 1 definierten Verfahren durch die im Kennzeichen des Patentanspruches 1 angegebenen Merkmale gelöst.

Die der Erfindung zugrundeliegende Idee besteht ausgehend davon, den Kanalwechsel in einem Telekommunikationsteilsystem, das in einem Telekommunikationssystem als lokale Nachrichtenübertragungsschleife eingebunden ist - insbesondere eines in einem ISDN-System eingebundenen DECT-spezifischen RLL/ WLL-Teilsystems - der eingangs genannten und umrissenen Art durch zwei Befehle, einen als Umschaltkommando ausgelegten ersten Befehl und einen als Umschaltantwort ausgelegten zweiten Befehl, zu steuern, darin, dass der Kanalwechsel gezielt angestoßen wird.

Gemäß der Weiterbildung der Erfindung nach Anspruch 3 ist es von Vorteil, wenn eine Zeitsteuerung vorgesehen wird, gemäß der beim Ausbleiben der Umschaltantwort auf das Umschaltkommando ein weiteres Umschaltkommando übertragen wird.

Gemäß der Weiterbildung der Erfindung nach Anspruch 5 ist es von Vorteil, wenn mit der Umschaltantwort bestätigt wird, dass eine Umschaltung bereits vorgenommen worden ist.

Gemäß der Weiterbildung der Erfindung nach Anspruch 6 ist es von Vorteil, wenn der Kanalwechsel durch eine zeitlich begrenzte Unterbrechung der Informations- bzw. Nachrichtenübertragung in dem Telekommunikationsteilsystem und anschließender Wiederaufnahme der Informations- bzw. Nachrichtenübertragung angestoßen und durchgeführt wird.

Dies geschieht vorzugsweise - bei einem Kanalwechsel von einem DECT-spezifischen $C_f$-Kanal zu einem DECT-spezifischen $C_s$-Kanal und umgekehrt bzw. bei einem Kanalwechsel von einem ersten DECT-spezifischen $C_s$-Kanal zu einem zweiten DECT-spezifischen $C_s$-Kanal gemäß der Ansprüche 45 und 46 durch ein in das DECT-Protokoll als Umschaltkommando eingebundenes ATTRIBUTE_REQUEST-Informationselement und ein in das DECT-Protokoll als Umschaltantwort eingebundenes ATTRIBUTE_ CONFIRM-Informationselement bzw. gemäß den Ansprüchen 47 und 48 durch ein in das DECT-Protokoll als Umschaltkommando eingebundenes SUSPEND- Informationselement und ein in das DECT-Protokoll als Umschaltantwort eingebundenes RESUME- Informationselement).

Gemäß der Weiterbildung der Erfindung nach Anspruch 10 ist es von Vorteil, wenn nach der Übertragung der Umschaltantwort und vor der Übertragung der Systeminformationen auf dem anderen Teilsystemkanal vorgegebene teilsystemspezifische Parameter zurückgesetzt werden.

Gemäß der Weiterbildung der Erfindung nach Anspruch 11 ist es von Vorteil, wenn nach dem Kanalwechsel eine Testnachricht mit Aufforderung zur Bestätigung gesendet wird.

Gemäß der Weiterbildung der Erfindung nach Anspruch 14 ist es von Vorteil, wenn die Informationen nach einem vorgegebenen Übertragungsprinzip mit einer vorgegebenen Übertragungssequenz übertragen und auf dem anderen Teilsystemkanal nach einem Kanalwechsel mit einer kleinstmöglichen Übertragungssequenz übertragen werden.

Gemäß der Weiterbildung der Erfindung nach Anspruch 16 ist es von Vorteil, wenn Systemnachrichten mit Nutzinformationen und/oder den Systeminformationen und/oder die Teilsysteminformationen zwischen den Telekommunikationsschnittstellen des Telekommunikationsteilsystems auf Übertragungswegen mit unterschiedlichen Kennungen übertragen werden.

Weitere vorteilhafte Weiterbildungen der Erfindung sind in übrigen den Unteransprüchen angegeben.

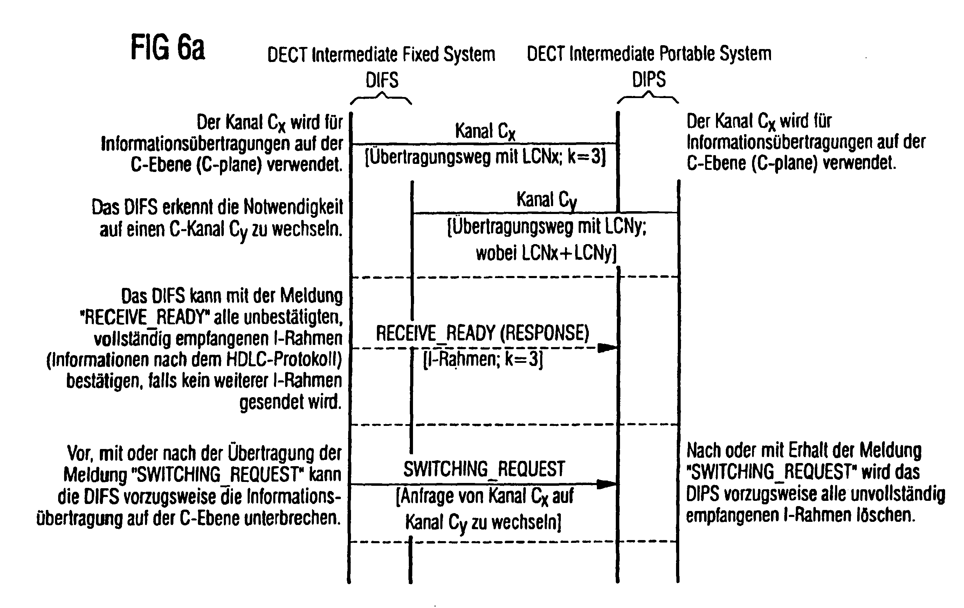

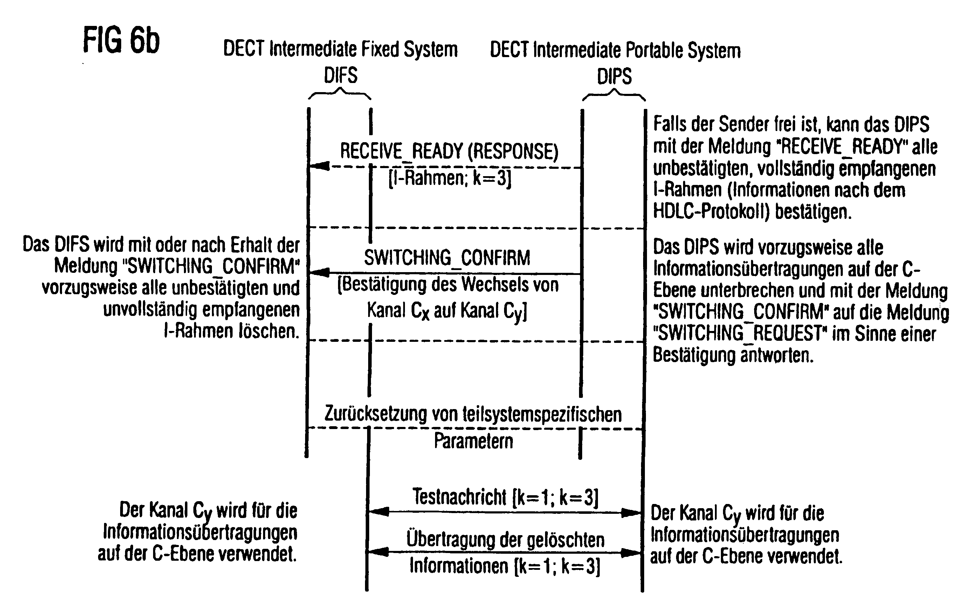

Ein erstes Ausführungsbeispiel der Erfindung wird anhand der FIGUREN 6 bis 10 erläutert.

Die FIGUREN 6 bis 10 zeigen verschiedene Anreiz-Zustands-Diagramme, die mögliche Abläufe beim des Wechsels von Telekommunikationskanälen eines in einem Telekommunikationssystem als lokale Nachrichtenübertragungsschleife eingebundenen Telekommunikationsteilsystem, insbesondere eines in einem ISDN-System eingebundenen RLL/WLL-Teilsystems RW-TTS- DIIS, darstellen.

FIGUR 6 zeigt ausgehend von den FIGUREN 1 bis 5 ein erstes Anreiz-Zustands-Diagramm, das den prinzipiellen Steuerungsablauf für einen Teilsystemkanalwechsel darstellt.

Die erste Telekommunikationsschnittstelle DIFS ist auf einem ersten Übertragungsweg mit einer ersten Übertragungswegnummer LCNx (**L**ogical **Co**nnection **N**umber; Kennung) durch einen ersten Teilsystemkanal $C_x$ mit der zweiten Telekommunikationsschnittstelle DIPS verbunden. Darüber hinaus besteht zwischen der ersten Telekommunikationsschnittstelle DIFS und der zweiten Telekommunikationsschnittstelle DIPS auf einem zweiten Übertragungsweg mit einer zweiten Übertragungswegnummer LCNy (Kennung) durch einen zweiten Teilsystemkanal $C_y$ eine weitere Telekommunikationsverbindung oder es kann alternativ zwischen der ersten Telekommunikationsschnittstelle DIFS und der zweiten Telekommunikationsschnittstelle DIPS auf einem zweiten Übertragungsweg mit einer zweiten Übertragungswegnummer LCNy durch einen zweiten Teilsystemkanal $C_y$ eine weitere Telekommunikationsverbindung aufgebaut werden.

Für die Übertragungswegnummern LCNx, LCNy gilt dabei die Beziehung LCNx ≠ LCNy. Der erste Teilsystemkanal $C_x$ kann als DECT-spezifischer $C_f$-Kanal oder $C_s$-Kanal ausgebildet sein. Aufgrund der bei dem DECT-spezifischen Telekommunikationsteilsystem RW-TTS, DIIS auftretenden Kanalkonstellationen ist der zweite Teilsystemkanal $C_y$ demzufolge ein $C_s$-Kanal bzw. ein $C_f$-Kanal oder $C_s$-Kanal. Nach FIGUR 6 wird der erste Teilsystemkanal $C_x$ für Informationsübertragungen auf der C-Ebene (C-plane) verwendet.

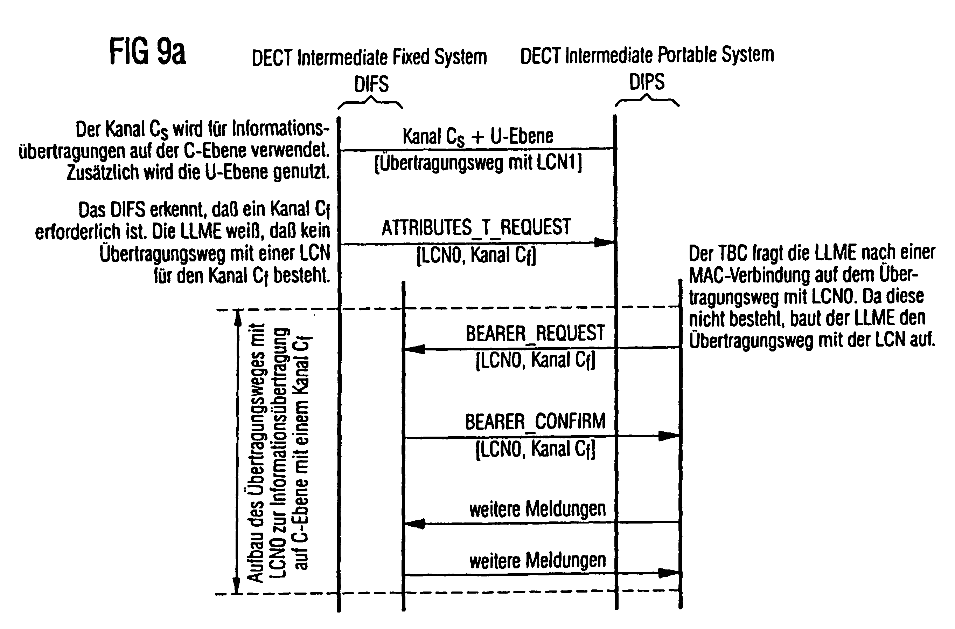

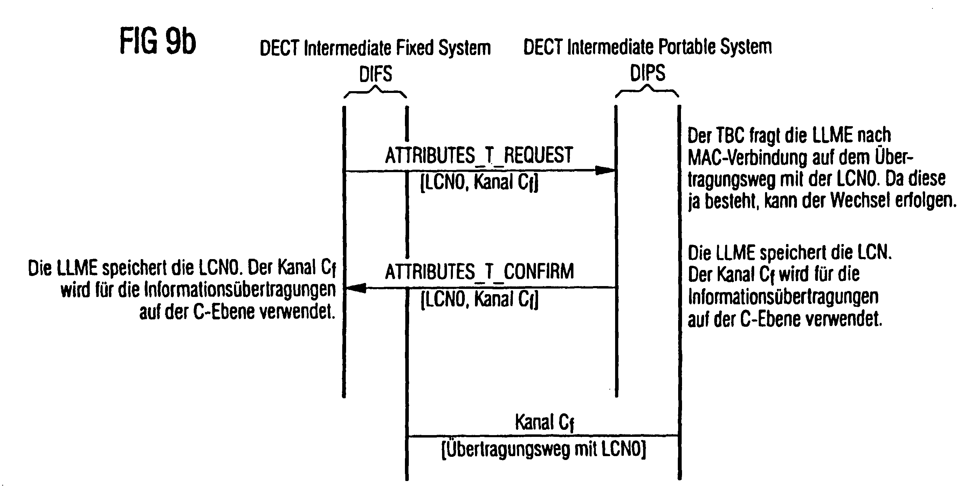

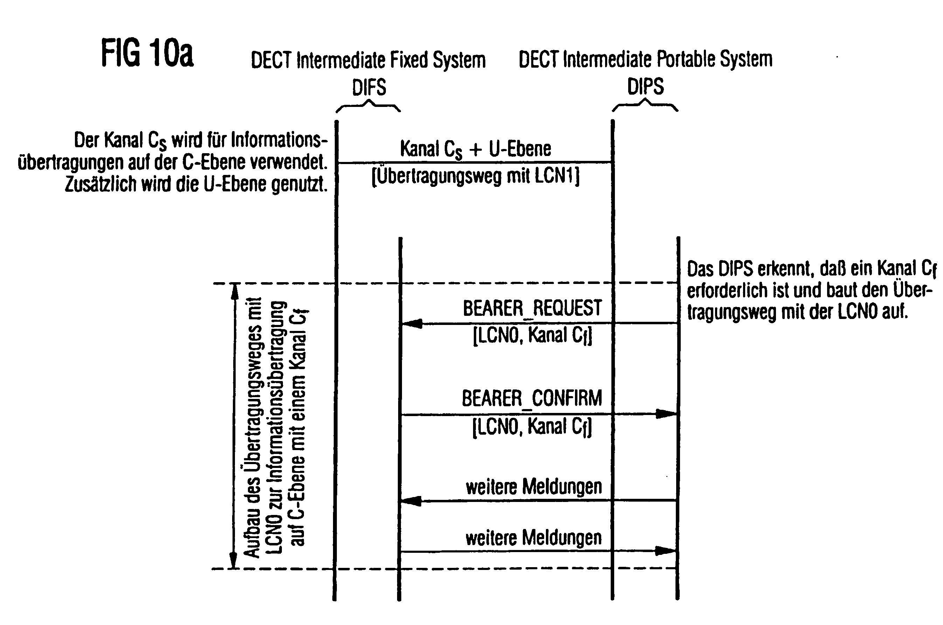

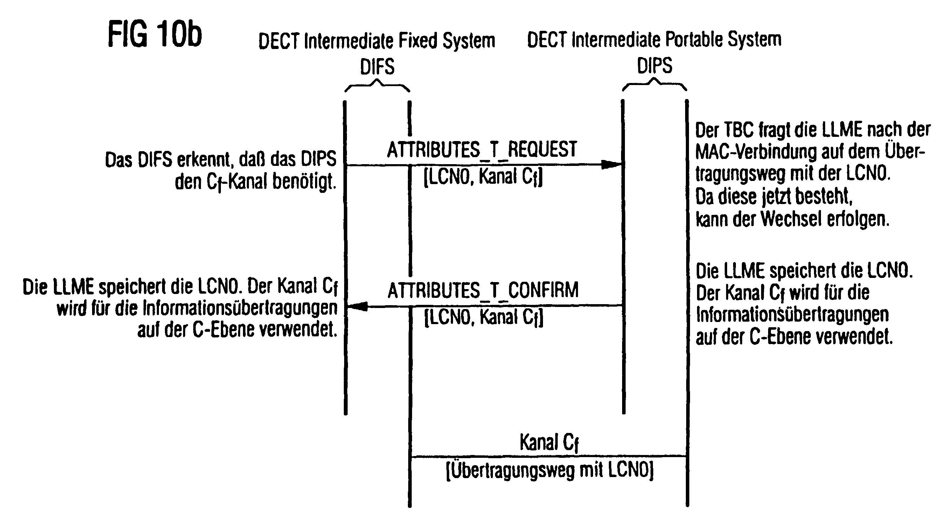

Zum Aufbau eines Übertragungsweges werden in bekannter Weise eine DECT-spezifische erste B-Feld-Meldung "BEARER_REQUEST" (vgl. ETSI-Publikation ETS 300175-3, Oktober 1992, Kap. 7.3.3.2) als Kommando (COMMAND) und eine DECT-spezifische zweite B-Feld-Meldung "BEARER_CONFIRM (vgl. ETSI-Publikation ETS 300175-3, Oktober 1992, Kap. 7.3.3.3) als Antwort (RESPONSE) gesendet (vgl. ETSI-Publikation ETS 300175-3, Oktober 1992, Kap. 10.5.1.1 bis 10.5.1.3). Das Senden der ersten B-Feld-Meldung "BEARTER_REQUEST" wird dabei vorzugsweise von der zweiten Telekommunikationsschnittstelle DIPS initiiert (vgl. FIGUREN 9 und 10 und ETSI-Publikation ETS 300175-3, Oktober 1992, Kap. 10.5.1.2 und 10.5.1.3) .

Durch eine Analyse der ISDN-"Schicht 2"-/"Schicht 3"-Nachrichten bzw. der hierüber übertragenen Nachrichtenmenge (vgl. Druckschrift "Nachrichtentechnik Elektronik, Berlin 41, **T**2: (1991) Heft 4, Seiten 138 bis 143;") auf der Übertragungsstrecke "ISDN-Netz <--> ISDN-Teilnehmer (Terminal Endpoint TE)" erkennt z.B. die erste Telekommunikationsschnittstelle DIFS die Notwendigkeit, einen Kanalwechsel (Wechsel von dem ersten Teilsystemkanal $C_x$ auf den zweiten Teilsystemkanal $C_y$) herbeizuführen. Das Ergebnis der Analyse bildet dabei den Stimulus für den Kanalwechsel.

Ein mögliches erstes Ergebnis dieser Analyse kann beispielsweise darin bestehen, dass auf dem ersten Teilsystemkanal $C_x$ vorzugsweise für eine vorgegebene Zeitdauer keine Nachrichten zwischen der ersten Telekommunikationsschnittstelle DIFS und der zweiten Telekommunikationsschnittstelle DIPS übertragen werden.

Ein mögliches zweites Ergebnis dieser Analyse kann beispielsweise darin bestehen, dass zwei Übertragungswege mit jeweils einer C-Ebene und einer U-Ebene aufgebaut sind und der Übertragungsweg auf dem die C-Ebene genutzt wird abgebaut werden soll; so dass demzufolge ein Wechsel von dem abzubauenden, bisher aktiven $C_s$-Kanal zum bisher inaktiven $C_s$-Kanal notwendig wird.

Zur Minimierung des Aufwands ist es zweckmäßig, die vorstehend beschriebene Analyse in eine der Telekommunikationsschnittstellen DIFS, DIPS - z. B. in vorteilhafter Weise der ersten Telekommunikationsschnittstelle DIFS - zu konzentrieren und daraus die zweite Telekommunikationsschnittstelle DIPS zu steuern [MASTER-SLAVE -Konfiguration, bei der die erste Telekommunikationsschnittstelle DIFS der MASTER und die zweite Telekommunikationsschnittstelle DIPS der SLAVE ist]. Die erste Telekommunikationsschnittstelle DIFS hat in dieser Konstellation immer die Möglichkeit, eine dem ISDN-Dienst entsprechende DECT-Kanalstruktur auszuwählen (C-Ebene und/oder U-Ebene).

Anstelle der ersten Telekommunikationsschnittstelle DIFS ist es auch möglich, die zweite Telekommunikationsschnittstelle DIPS hierfür vorzusehen. Dies geht aber nur dann, wenn diese einen direkten Zugriff zur ISDN-"Schicht 3" besitzt. Alleine aus der ISDN-"Schicht 2"-Funktion kann die zweite Telekommunikationsschnittstelle DIPS nicht in allen Situationen eine TE-individuelle Verbindung mit C-Ebene und U-Ebene eindeutig auf eine entsprechende DECT-Kanalstruktur abbilden.

In der weiteren Erläuterung des Ausführungsbeispieles wird die vorstehend beschriebene MASTER-SLAVE-Konfiguration zugrunde gelegt.

Mit einer als Antwort (RESPONSE) gesendeten DECT-spezifischen ersten DLC-Meldung "RECEIVE_READY" (vgl. ETSI-Publikation ETS 300175-4, Oktober 1992, Kap. 7.11.2) wird die erste Telekommunikationsschnittstelle DIFS vorzugsweise - nachdem sie die Notwendigkeit eines Kanalwechsels erkannt hat - alle unbestätigten (unbeantworteten), auf dem ersten Teilsystemkanal $C_x$ nach dem HDLC-Protokoll (**H**igh level **D**ata **L**ink **C**ontrol) übertragenen und vollständig empfangenen Informationen, die sogenannten I-Rahmen (Informationspaket), bestätigen (beantworten), falls kein weiterer I-Rahmen gesendet wird.

Nach dem HDLC-Protokoll ist es z.B. möglich, die Informationen (I-Rahmen) in Übertragungssequenzen (Fenstern) zu übertragen und jede Übertragungssequenz (jedes Fenster) separat zu quittieren. Im vorliegenden Fall werden die Informationen beispielsweise mit einer Fenstergröße von k = 3 übertragen, bevor quittiert wird. Die Fenstergröße k = 3 bedeutet dabei bezüglich der vorstehend erwähnten I-Rahmen, dass nach jedem dritten I-Rahmen eine Quittierung der zuvor übertragenen drei Rahmen stattfindet. Für die Fenstergröße k gilt allgemein folgende Beziehung:

$$1 \leq k \leq n \qquad \text{mit } n \in N$$

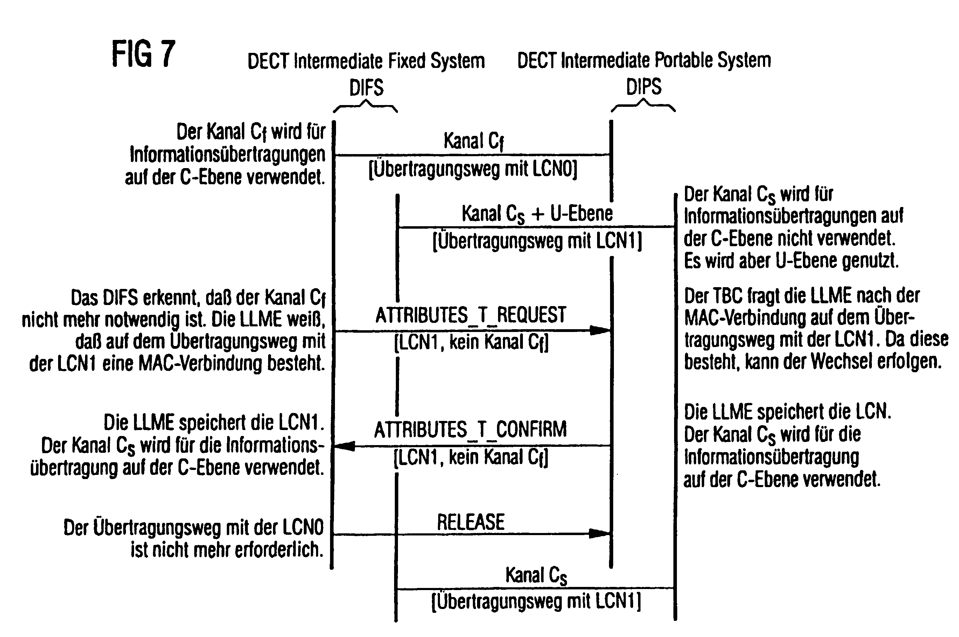

Durch die Übertragung einer ersten Meldung "SWITCHING_REQUEST"., die z.B. entweder im DECT-Standard definiert sein kann (vgl. MAC-Meldung "ATTRIBUTES_T._REQUEST" in FIGUREN 7 bis 10 gemäß ETSI-Publikation ETS 300175-3, Oktober 1992, Kap. 7.2.5.3.8) oder in diesem noch zu definieren ist, wird der Wunsch der ersten Telekommunikationsschnittstelle DIFS, die Übertragung der Systeminformationen von dem ersten Teilsystemkanal $C_x$ auf den zweiten Teilsystemkanal $C_y$ zu verlagern, der zweiten Telekommunikationsschnittstelle DIPS übermittelt. Der Wunsch kann dabei - wie vorstehend erwähnt - durch Stimulation oder ohne jeglichen Anstoß entstanden sein.

Aufgrund der Übertragung dieser Meldung kann die erste Telekommunikationsschnittstelle DIFS entweder - vorzugsweise - die eigene Informationsübertragung auf der C-Ebene unterbrechen oder mit der Übertragung der Informationen auf der C-Ebene fortfahren. Unterbrechung bedeutet dabei, dass die erste Telekommunikationsschnittstelle DIFS für eine vorgegebene Zeitdauer keine weiteren Informationen mehr senden wird. Die Unterbrechung kann beispielsweise vor, mit oder nach der Übertragung der Meldung erfolgen.

Darüber hinaus kann die Meldung an den I-Rahmengrenzen und innerhalb eines I-Rahmens gesendet werden.

Die zweite Telekommunikationsschnittstelle DIPS wird mit oder nach Erhalt der Meldung "SWITCHING_REQUEST" vorzugsweise alle unvollständig empfangenen I-Rahmen löschen und sie kann mit oder nach Erhalt der Meldung "SWITCHING_REQUEST" die eigene Informationsübertragung auf der C-Ebene, wie die erste Telekommunikationsschnittstelle DIFS, entweder unterbrechen oder fortfahren.

Darüber hinaus kann die zweite Telekommunikationsschnittstelle DIPS, für den Fall das der eigene Sender frei ist, mit der als Antwort (RESPONSE) gesendeten DECT-spezifischen ersten DLC-Meldung "RECEIVE_READY" (vgl. ETSI-Publikation ETS 300175-4, Oktober 1992, Kap. 7.11.2) alle unbestätigten (unbeantworteten), auf dem ersten Teilsystemkanal $C_x$ nach dem HDLC-Protokoll (**H**igh level **D**ata **L**ink **C**ontrol) übertragenen und vollständig empfangenen Informationen, die sogenannten I-Rahmen, bestätigen (beantworten).

Alternativ zu der unmittelbaren Unterbrechung ist es auch möglich, dass die zweite Telekommunikationsschnittstelle DIPS vor der Unterbrechung die Übertragung eines I-Rahmens abschließt.

Die Unterbrechung der Informationsübertragung oder das Fortfahren der Informationsübertragung auf dem ersten Teilsystemkanal $C_x$ durch die zweite Telekommunikationsschnittstelle DIPS erfolgt vorzugsweise zwischen dem Empfang der ersten Meldung und vor der Übertragung einer zweiten Meldung "SWITCHING_ CONFIRM", die z.B. wieder entweder im DECT-Standard definiert sein kann (vgl. MAC-Meldung "ATTRIBUTES_ T._CONFIRM" in FIGUREN 7 bis 10 gemäß ETSI-Publikation ETS 300175-3, Oktober 1992, Kap. 7.2.5.3.8) oder in diesem noch zu definieren ist.

Durch die zweite Meldung "SWITCHING_ CONFIRM" wird beispielsweise dem Wunsch der ersten Telekommunikationsschnittstelle DIFS nach einem Wechsel des Teilsystemkanals entsprochen, indem diese bestätigt (positiv beantwortet) wird.

Es ist aber auch möglich, dass die zweite Telekommunikationsschnittstelle DIPS dem Wunsch bewusst oder unbewusst (z.B. dadurch, dass sie die erste Meldung aufgrund einer Störung auf der Funkübertragungsstrecke nicht empfangen hat) nicht entspricht.

So wird für den Fall, dass dem Wunsch bewusst nicht entsprochen wird, die erste Meldung "SWITCHING_REQUEST" entweder unmittelbar oder mittelbar, z.B. dadurch, dass eine vorgegebene Zeitdauer für die Bestätigung der ersten Meldung überschritten wird, von der zweiten Telekommunikationsschnittstelle DIPS abgelehnt (negativ beantwortet).

Anderenfalls wird die erste Meldung "SWITCHING_REQUEST" mittelbar, z.B. dadurch, dass eine vorgegebene Zeitdauer für die Bestätigung der ersten Meldung überschritten wird, abgelehnt (negativ beantwortet).

In beiden vorstehend genannten Fällen wird entweder die erste Meldung "SWITCHING_REQUEST" von der ersten Telekommunikationsschnittstelle DIFS für eine vorgegebene Anzahl nochmals übertragen oder der Kanalwechsel für unbestimmte Zeit abgebrochen.

Aufgrund der Übertragung der zweiten Meldung "SWITCHING_CONFIRM" wird die Informationsübertragung auf dem zweiten Teilsystemkanal $C_y$ fortgesetzt. Die Fortsetzung kann dabei vorzugsweise mit oder nach dem Übertragen der Meldung erfolgen.

Nach oder mit Erhalt der zweiten Meldung "SWITCHING_CONFIRM" wird die erste Telekommunikationsschnittstelle DIFS vorzugsweise die unbestätigten, auf dem ersten Teilsystemkanal $C_x$ übertragenen und unvollständig empfangenen Informationen ebenfalls löschen.

Bevor auf dem zweiten Teilsystemkanal $C_y$ die von der ersten Telekommunikationsschnittstelle DIFS und der zweiten Telekommunikationsschnittstelle DIPS gelöschten Informationen erneut übertragen werden, werden teilsystemspezifische Parameter, wie z.B. der bezüglich der DLC-Schicht spezifische Rückübertragungszähler bzw. -zeitgeber (vgl. ETSI-Publikation ETS 300175-4, Oktober 1992, Kap. 9.2.5.7) sowie die $C_T$-Paket-nummer (vgl. ETSI-Publikation ETS 300175-3, Oktober 1992, Kap. 7.1.2) zurückgesetzt.

Darüber hinaus kann auf dem zweiten Teilsystemkanal $C_y$, bevor die von der ersten Telekommunikationsschnittstelle DIFS und der zweiten Telekommunikationsschnittstelle DIPS gelöschten Informationen erneut übertragen werden, eine Testnachricht übertragen werden, die bestätigt werden muss. Die Testnachricht ist dabei vorzugsweise die als Kommando (COMMAND) gesendete erste DLC-Meldung "RECEIVE_READY" (vgl. ETSI-Publikation ETS 300175-4, Oktober 1992, Kap. 7.11.2), während die Bestätigung der Testnachricht vorzugsweise die als Antwort (RESPONSE) gesendete erste DLC-Meldung "RECEIVE_READY" (vgl. ETSI-Publikation ETS 300175-4, Oktober 1992, Kap. 7.11.2) ist.

Sowohl die Testnachricht als auch die gelöschten Informationen werden vorzugsweise, um eine schnelle Synchronisation auf dem zweiten Teilsystemkanal $C_y$ zu erreichen, zu Beginn (Anfangsphase der Übertragung) mit der kleinstmöglichen Fenstergröße gemäß dem HDLC-Protokoll, das ist $k = 1$, übertragen und anschließend wieder mit der Fenstergröße $k = 3$ übertragen.

FIGUR 7 zeigt ausgehend von FIGUR 6 ein zweites Anreiz-Zustands-Diagramm, das den Steuerungsablauf für den Wechsel von einem ersten Teilsystemkanal $C_f$ zu einem zweiten Teilsystemkanal $C_s$ dar-

stellt.

Der erste Teilsystemkanal $C_f$ wird für die Informationsübertragung auf der C-Ebene verwendet. Der zweite Teilsystemkanal $C_s$ wird für die Informationsübertragung auf der C-Ebene nicht verwendet. Es wird aber die U-Ebene genutzt. Der erste Teilsystemkanal $C_f$ besitzt eine größere Übertragungskapazität als der zweite Teilsystemkanal $C_s$.

Die erste Telekommunikationsschnittstelle DIFS erkennt, dass der erste Teilsystemkanal $C_f$ nicht mehr notwendig ist und sendet eine erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS.

Die zweite Telekommunikationsschnittstelle DIPS bestätigt die erste MAC-Meldung "ATTRIBUTES_T._REQUEST", indem sie eine zweite MAC-Meldung "ATTRIBUTES_T._CONFIRM" zur ersten Telekommunikationsschnittstelle DIFS sendet. Danach wird der zweite Teilsystemkanal $C_s$ für die Informationsübertragung auf der C-Ebene verwendet und der erste Teilsystemkanal $C_f$ durch das Übertragen einer dritten MAC-Meldung "RELEASE" (vgl. ETSI-Publikation ETS 300175-3, Oktober 1992, Kap. 7.2.5.3.13) aufgelöst.

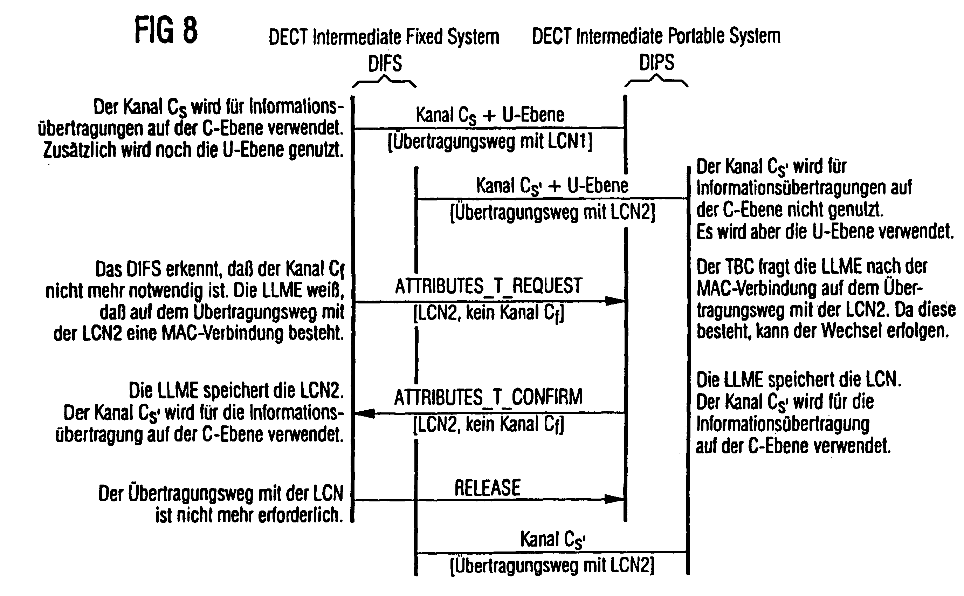

FIGUR 8 zeigt ausgehend von FIGUR 6 ein drittes Anreiz-Zustands-Diagramm, das den Steuerungsablauf für den Wechsel von dem zweiten Teilsystemkanal $C_s$ zu einem dritten Teilsystemkanal $C_{s'}$ darstellt.

Der zweite Teilsystemkanal $C_s$ wird für die Informationsübertragung auf der C-Ebene verwendet. Darüber hinaus wird die U-Ebene genutzt. Der dritte Teilsystemkanal $C_{s'}$ wird für die Informationsübertragung auf der C-Ebene nicht verwendet. Es wird aber die U-Ebene genutzt. Der zweite Teilsystemkanal $C_s$ besitzt die gleiche Übertragungskapazität wie der dritte Teilsystemkanal $C_{s'}$.

Die erste Telekommunikationsschnittstelle DIFS erkennt, dass der zweite Teilsystemkanal $C_s$ nicht mehr notwendig ist und sendet die erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS.

Die zweite Telekommunikationsschnittstelle DIPS bestätigt die erste MAC-Meldung "ATTRIBUTES_T._REQUEST", indem sie die zweite MAC-Meldung "ATTRIBUTES_T._CONFIRM" zur ersten Telekommunikationsschnittstelle DIFS sendet. Danach wird der dritte Teilsystemkanal $C_{s'}$ für die Informationsübertragung auf der C-Ebene verwendet und der zweite Teilsystemkanal $C_s$ durch das Übertragen der dritten MAC-Meldung "RELEASE" (vgl. ETSI-Publikation ETS 300175-3, Oktober 1992, Kap. 7.2.5.3.13) aufgelöst.

FIGUR 9 zeigt ausgehend von FIGUR 6 ein viertes Anreiz-Zustands-Diagramm, das den Steuerungsablauf für den Wechsel von dem zweiten Teilsystemkanal $C_s$ zu dem ersten Teilsystemkanal $C_f$ darstellt, wobei die Vorbereitung des Wechsels von der ersten Telekommunikationsschnittstelle DIFS initiiert wird.

Der zweite Teilsystemkanal $C_s$ wird für die Informationsübertragung auf der C-Ebene verwendet. Darüber hinaus wird die U-Ebene genutzt. Ein Übertragungsweg mit einer Übertragungswegnummer LCN (Kennung) zur Nutzung des ersten Teilsystemkanal $C_f$ ist noch nicht aufgebaut. Der zweite Teilsystemkanal $C_s$ hat eine kleinere Übertragungskapazität als der erste Teilsystemkanal $C_f$.

Die erste Telekommunikationsschnittstelle DIFS erkennt, dass der erste Teilsystemkanal $C_f$ notwendig ist. Da aber noch kein Übertragungsweg mit der Kennung LCN für den ersten Teilsystemkanal $C_f$ besteht, sendet die erste Telekommunikationsschnittstelle DIFS der zweiten Telekommunikationsschnittstelle DIPS die erste MAC-Meldung "ATTRIBUTES_T._REQUEST" (vgl. ETSI-Publikation ETS 300175-3, Oktober 1992, Kap. 7.2.5.3.8). Mit dieser Meldung teilt sie der zweiten Telekommunikationsschnittstelle DIPS mit, dass ein Übertragungsweg mit der Kennung LCN, z.B. der Kennung LCN0, für den ersten Teilsystemkanal $C_f$ benötigt wird.

Die Wahl der Kennung LCN - im vorliegenden Fall der LCN0 - als Kennung für den aufzubauenden Übertragungsweg erfolgt nicht willkürlich, sondern gezielt nach einem vorgegebenen Auswahlkriterium. Dieses Kriterium besteht ganz allgemein formuliert darin, dass als Kennung LCN die Kennung der möglichen Kennungen LCN0, LCN1, LCN2 herangezogen wird, die noch nicht für einen anderen Übertragungsweg benutzt wird, also frei ist.

Alternativ zu dem vorstehend genannten Auswahlkriterium ist es auch möglich, spezielle Ausprägungen des Auswahlkriteriums für die Kennungsvergabe heranzuziehen. So kann z.B. - wie im vorliegenden Fall - immer die kleinste freie Kennung der Kennungen LCN0, LCN1, LCN2 oder die größte freie Kennung der Kennungen LCN0, LCN1, LCN2 herangezogen werden.

Die zweite Telekommunikationsschnittstelle DIPS, die gemäß den Ausführungen bei der Beschreibung der FIGUR 6 vorzugsweise für den Aufbau eines Übertragungsweges verantwortlich ist (vgl. ETSI-Publikation ETS 300175-3, Oktober 1992, Kap. 10.5.1.2 und 10.5.1.3), sendet die DECT-spezifische erste B-Feld-Meldung "BEARER_REQUEST" (vgl. ETSI-Publikation ETS 300175-3, Oktober 1992, Kap. 7.3.3.2) als Kommando (COMMAND) an die erste Telekommunikationsschnittstelle DIFS. Die erste Telekommunikationsschnittstelle DIFS sendet daraufhin nach Erhalt der ersten B-Feld-Meldung die DECT-spezifische zweite B-Feld-Meldung "BEARER_CONFIRM" (vgl. ETSI-Publikation ETS 300175-3, Oktober 1992, Kap. 7.3.3.3) als Antwort (RESPONSE) zu der zweiten Telekommunikationsschnittstelle DIPS. In diesem Zustand, also nach Erhalt der zweiten B-Feld-Meldung durch die zweite Telekommunikationsschnittstelle DIPS, ist der weitere Übertragungsweg hergestellt (vgl. ETSI-Publikation ETS 300175-3, Oktober 1992, Kap. 10.5.1.1 bis 10.5.1.3).

Die erste Telekommunikationsschnittstelle DIFS sendet danach die erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS.

Die zweite Telekommunikationsschnittstelle DIPS bestätigt die erste MAC-Meldung "ATTRIBUTES_T._REQUEST", indem sie die zweite MAC-Meldung "ATTRIBUTES_T._CONFIRM" zur ersten Telekommunikationsschnittstelle DIFS sendet. Danach wird der erste Teilsystemkanal $C_f$ für die Informationsübertragung auf der C-Ebene verwendet.

FIGUR 10 zeigt ausgehend von FIGUR 6 ein fünftes Anreiz-Zustands-Diagramm, das den Steuerungsablauf für den Wechsel von dem zweiten Teilsystemkanal $C_s$ zu dem ersten Teilsystemkanal $C_f$ darstellt, wobei die Vorbereitung des Wechsels von der zweiten Telekommunikationsschnittstelle DIPS initiiert wird.

Der zweite Teilsystemkanal $C_s$ wird für die Informationsübertragung auf der C-Ebene verwendet. Darüber hinaus wird die U-Ebene genutzt. Ein Übertragungsweg mit einer Übertragungswegnummer LCN (Kennung) zur Nutzung des ersten Teilsystemkanal $C_f$ ist noch nicht aufgebaut. Der zweite Teilsystemkanal $C_s$ hat eine kleinere Übertragungskapazität als der erste Teilsystemkanal $C_f$.

Die zweite Telekommunikationsschnittstelle DIFS erkennt, dass der erste Teilsystemkanal $C_f$ notwendig ist. Da aber noch kein Übertragungsweg mit der Kennung LCN, z.B. der Kennung LCN0, für den ersten Teilsystemkanal $C_f$ besteht, wird dieser von ihr aufgebaut.

Die Wahl der Kennung LCN - im vorliegenden Fall der LCN0 - als Kennung für den aufzubauenden Übertragungsweg erfolgt nicht willkürlich, sondern wiederum gezielt nach einem vorgegebenen Auswahlkriterium. Dieses Kriterium besteht ganz allgemein formuliert darin, dass als Kennung LCN die Kennung der möglichen Kennungen LCN0, LCN1, LCN2 herangezogen wird, die noch nicht für einen anderen Übertragungsweg benutzt wird, also frei ist.

Alternativ zu dem vorstehend genannten Auswahlkriterium ist es auch möglich, spezielle Ausprägungen des Auswahlkriteriums für die Kennungsvergabe heranzuziehen. So kann z.B. - wie im vorliegenden Fall - immer die kleinste freie Kennung der Kennungen LCN0, LCN1, LCN2 oder die größte freie Kennung der Kennungen LCN0, LCN1, LCN2 herangezogen werden.

Für den Aufbau des Übertragungsweges sendet die zweite Telekommunikationsschnittstelle DIPS, die gemäß den Ausführungen bei der Beschreibung der FIGUR 6 vorzugsweise für den Aufbau eines Übertragungsweges verantwortlich ist (vgl. ETSI-Publikation ETS 300175-3, Oktober 1992, Kap. 10.5.1.2 und 10.5.1.3), der ersten Telekommunikationsschnittstelle DIFS die DECT-spezifische erste B-Feld-Meldung "BEARER_REQUEST" (vgl. ETSI-Publikation ETS 300175-3, Oktober 1992, Kap. 7.3.3.2) als Kommando (COMMAND).

Die erste Telekommunikationsschnittstelle DIFS sendet daraufhin nach Erhalt der ersten B-Feld-Meldung die DECT-spezifische zweite B-Feld-Meldung "BEARER_CONFIRM" (vgl. ETSI-Publikation ETS 300175-3, Oktober 1992, Kap. 7.3.3.3) als Antwort (RESPONSE) zu der zweiten Telekommunikationsschnittstelle DIPS. In diesem Zustand, also nach Erhalt der zweiten B-Feld-Meldung durch die zweite Telekommunikationsschnittstelle DIPS, ist der weitere Übertragungsweg hergestellt (vgl. ETSI-Publikation ETS 300175-3, Oktober 1992, Kap. 10.5.1.1 bis 10.5.1.3).

Dies von der ersten Telekommunikationsschnittstelle DIFS erkannt, sodass diese die erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS sendet.

Die zweite Telekommunikationsschnittstelle DIPS bestätigt die erste MAC-Meldung "ATTRIBUTES_T._REQUEST", indem sie die zweite MAC-Meldung "ATTRIBUTES_T._CONFIRM" zur ersten Telekommunikationsschnittstelle DIFS sendet. Danach wird der erste Teilsystemkanal $C_f$ für die Informationsübertragung auf der C-Ebene verwendet.

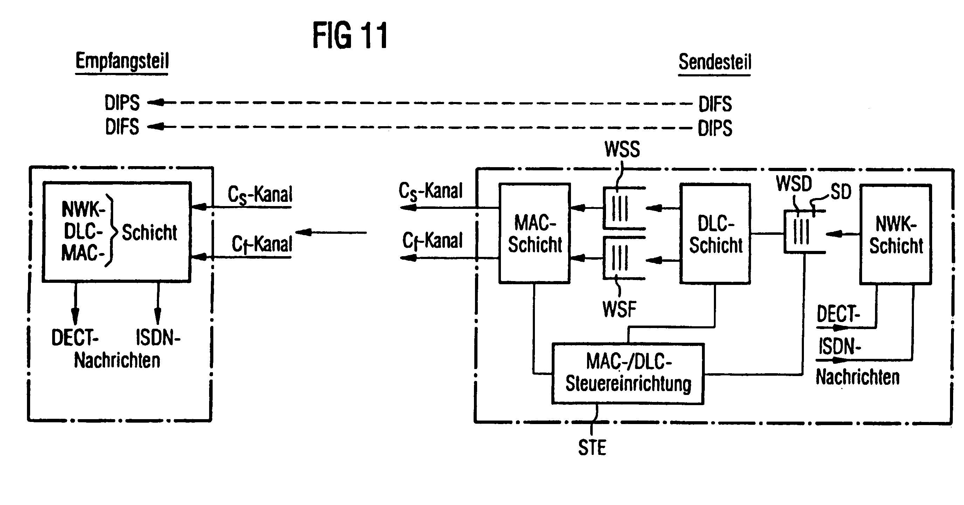

Ein zweites Ausführungsbeispiel der Erfindung wird anhand der FIGUREN 11 bis 15 erläutert.

FIGUR 11 zeigt ausgehend von den FIGUREN 1 bis 5 den prinzipiellen Aufbau eines Sendeteils und Empfangsteils jeweils für die erste Telekommunikationsschnittstelle DIFS und die zweite Telekommunikationsschnittstelle DIPS, der für die Analyse der ISDN-"Schicht 2"-/"Schicht 3"-Nachrichten bzw. der hierüber übertragenen Nachrichtenmenge (vgl. Druckschrift "Nachrichtentechnik Elektronik, Berlin 41, **T**2: (1991) Heft 4, Seiten 138 bis 143;") auf der Übertragungsstrecke "ISDN-Netz <--> ISDN-Teilnehmer (Terminal Endpoint TE)" von Bedeutung ist. Durch das Sendeteil und/oder das Empfangsteil erkennen/erkennt z.B. die erste Telekommunikationsschnittstelle DIFS und/oder die zweite Telekommunikationsschnittstelle DIPS die Notwendigkeit, einen Kanalwechsel (Wechsel von einem Teilsystemkanal auf einen anderen Teilsystemkanal) herbeizuführen. Das Ergebnis der Analyse bildet dabei den Stimulus für den Kanalwechsel. Der in FIGUR 11 dargestellte Aufbau des Sendeteils und Empfangsteils kann im Zusammenhang mit der Stimulation des Kanalwechsels auch für das erste Ausführungsbeispiel der Erfindung verwendet werden.

In dem Sendeteil der ersten Telekommunikationsschnittstelle DIFS bzw. der zweiten Telekommunikationsschnittstelle DIPS übergibt die NWK-Schicht (**N**et-**W**or**K**layer) in bekannter Weise ISDN-"Schicht 2"/"Schicht 3"-Informationen und DECT-Steuerinformationen über eine als Speicher ausgebildeten erste Warteschlange WSD an die DLC-Schicht (**D**ata **L**ink **C**ontrol). Eine MAC-/DLC-Steuereinrichtung STE des Sendeteils misst den Füllgrad in der Warteschlange WSD und stimuliert daraus die MAC-Schicht (**M**edium **A**ccess **C**ontrol) und DLC-Schicht. Solange der Füllgrad unter einer Schwelle SD bleibt, legt die DLC-Schicht die zu übertragende Information (Nachricht) in eine ebenfalls als Speicher ausgebildete zweite Warteschlange WSS ab, aus der sie die MAC-Schicht auf dem $C_s$-Kanal an das Empfangsteil überträgt.

Wenn die Schwelle SD überschritten wird, legt die DLC-Schicht die Information in eine wiederum als Speicher ausgebildete dritte Warteschlange WSF ab, aus der sie die MAC-Schicht auf einem $C_f$-Kanal, der hierfür aufgebaut wird, an das Empfangsteil überträgt. Der $C_s$-Kanal wird wieder verwendet, wenn die erste Warteschlange WSD und die dritte Warteschlange WSF leer sind.

Für die sich hieraus ergebenden Kanalwechsel zwischen dem $C_s$-Kanal und dem $C_f$-Kanal wird unterstellt, dass die Zuordnung $C_s$-Kanal <--> $C_f$-Kanal in der ersten Telekommunikationsschnittstelle DIFS und der zweiten Telekommunikationsschnittstelle DIPS unter Verwendung des DECT-Standards bekannt ist. Wie der $C_s$-Kanal so kann natürlich auch der $C_f$-Kanal, sofern dieser bereits existent ist, für Übertragungen in der Gegenrichtung benutzt werden.

Funktion im Einzelnen

Solange der Füllgrad der ersten Warteschlange WSD unter der Schwelle SD liegt, verwendet die DLC-Schicht zur Speisung der zweiten Warteschlange WSS das DECT-A-Feld-Format (DECT-Standard). Nach der Überschreitung der Schwelle SD weird die dritte Warteschlange WSF im DECT-B-Feld-Format gespeist. Die Umschaltung zum Senden aus der dritten Warteschlange WSF erfolgt nach Aufbau des $C_f$-Kanal, wenn die zweite Warteschlange WSS leer ist oder der $C_f$-Kanal bereit ist.

Für den Übergang vom A-Format auf das B-Format gibt es zwei Möglichkeiten:

a) Warteschlange WSS erhält nur komplette A-Feld-DLC-Rahmen:

Die Umschaltung erfolgt dann immer an DLC-Rahmengrenzen. Für die Dimensionierung der DLC-Rahmen gibt es drei Kriterien:

- möglichst kurze Rahmen, damit die Verzögerung der Umschaltung zum Senden aus der dritten Warteschlange WSF möglichst kurz bleibt,
- andererseits steigt der DLC-PDU-Datenüberhang (Data o-verhead; **P**rotocol **D**ata **U**nit), wenn die maximale DLC-Rahmenlänge nicht ausgenutzt wird,
- Überbrückung der Aufbauzeit für den $C_f$-Kanal.

Für die Steuerung der Umschaltung $C_s$-Kanal <--> $C_f$-Kanal werden DLC-Prozeduren (Data Link Control) verwendet.

So kommen z.B. die DECT-Standardprozeduren "Class B acknowledged suspension / Class B resumption" in modifizierter Form spezifisch für diese Anwendung (vgl. DECT-Standard ETS 300175-4, Oct. 1992, Kap. 9.2.7) in Frage.

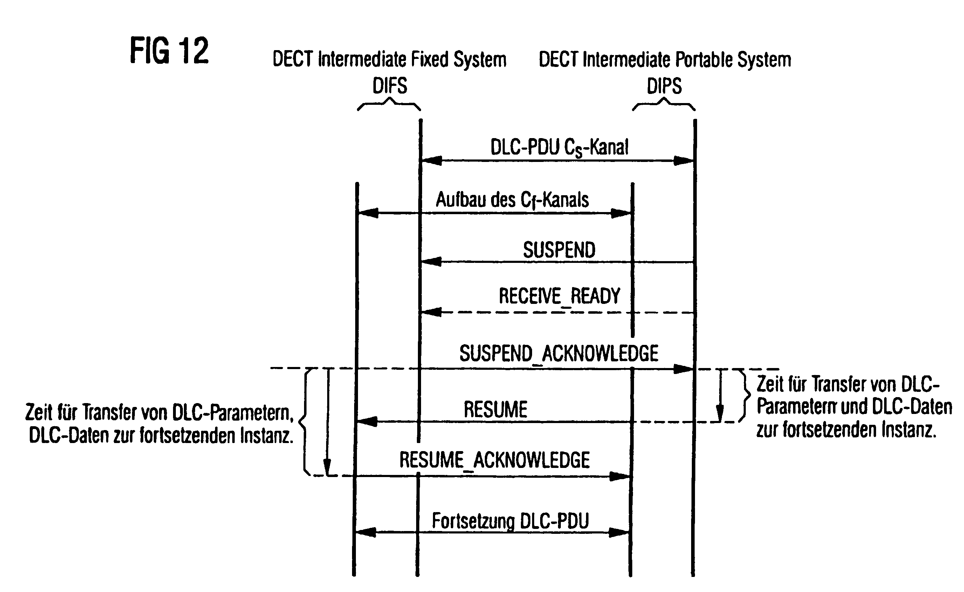

**$C_s$-Kanal -- > $C_f$-Kanal gemäß FIGUR 12**

Wenn die erste Warteschlange WSS leer ist, d. h. der letzte I-Rahmen nach dem HDLC-Protokoll quittiert ist, sendet die initiierende Telekommunikationsschnittstelle DIFS, DIPS (z.B. die zweite Telekommunikationsschnittstelle DIPS) einen Befehl "SUSPEND" auf dem $C_s$-Kanal. Falls die Gegenstelle (die erste Telekommunikationsschnittstelle DIFS) selbst noch I-Rahmen aus der ersten Warteschlange WSS zu senden hat, beendet er dies frühestmöglichst an der nächsten Rahmengrenze (restliche Rahmen werden in die dritte Warteschlange WSF übertragen), erwartet die letzte Quittung auf dem $C_s$-Kanal und akzeptiert dann den Befehl "SUSPEND" (Suspension) auf dem $C_s$-Kanal.

Danach initiiert die zweite Telekommunikationsschnittstelle DIPS die Wiederaufnahme (Resumption) der Verbindung (data link) durch einen Befehl "RESUME" auf dem $C_f$-Kanal. Die erste Telekommunikationsschnittstelle DIFS quittiert dies auf dem $C_f$-Kanal. Dann setzen beide Telekommunikationsschnittstellen DIFS, DIPS die Übertragung auf dem $C_f$-Kanal fort.

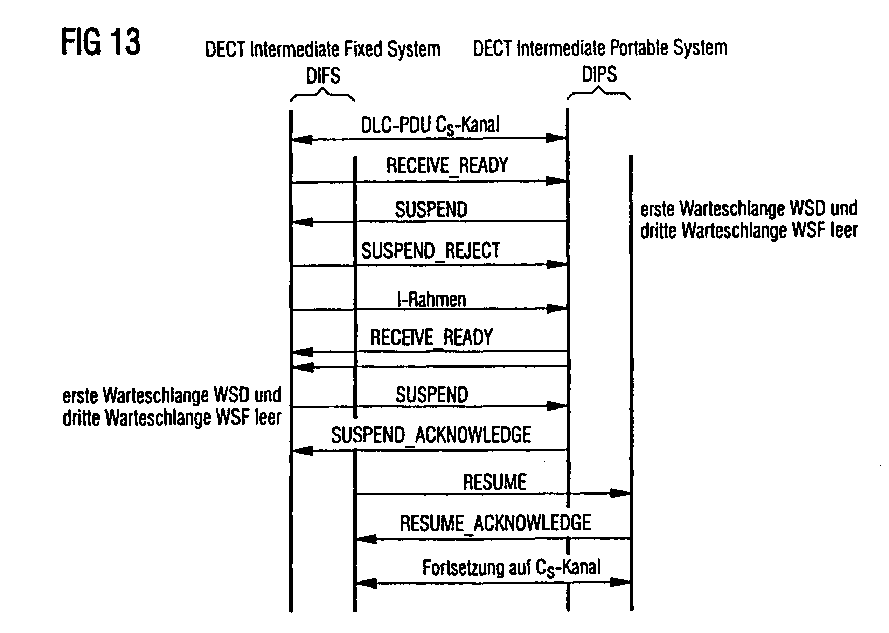

**$C_f$-Kanal --> $C_s$-Kanal gemäß FIGUR 13**

Die Rückschaltung erfolgt, wenn die erste Warteschlange WSD und die dritte Warteschlange WSF auf beiden Seiten leer sind und der letzte I-Rahmen quittiert ist.

Unterschieden werden dabei zwei Fälle:

Die Bedingung ist zuerst bei der Telekommunikationsschnittstelle erfüllt, die die Umschaltung veranlasst hat (die zweite Telekommunikationsschnittstelle DIPS).

- die zweite Telekommunikationsschnittstelle DIPS sendet den Befehl "SUSPEND" auf dem $C_f$-Kanal.
- die erste Telekommunikationsschnittstelle DIFS weist den Befehl "SUSPEND" auf dem $C_f$-Kanal zurück und setzt das Senden von Informationen auf dem $C_f$-Kanal fort.
- die erste Telekommunikationsschnittstelle DIFS übernimmt damit in der Folge auch die Initiative zur Umschaltung auf den $C_s$-Kanal und leitet seinerseits die "Suspension/Resumption" ein, wenn der $C_f$-Kanal nicht mehr benötigt wird. In der Zwischenzeit könnte auch die zweite Telekommunikationsschnittstelle DIPS den $C_f$-Kanal bei Bedarf spontan wieder benutzen.

Die Bedingung bei der Telekommunikationsschnittstelle DIFS, DIPS, die vorher die Umschaltung auf den $C_f$-Kanal veranlasst oder beibehalten hat, wird später erfüllt.

Dieser Fall beendet die Benutzung des $C_f$-Kanals und schaltet auf den $C_s$-Kanal zurück.

Die antwortende Telekommunikationsschnittstelle DIFS, DIPS akzeptiert in diesem Fall die "Suspension" auf dem $C_f$-Kanal. Die suspendierende Telekommunikationsschnittstelle DIFS, DIPS initiiert dann die "Resumption" auf dem $C_s$-Kanal.

### b) Umschaltung innerhalb von I-Rahmen

Dieser Ansatz vermeidet den zusätzlichen Datenüberhang (O-verhead) für optimale DLC-Rahmen, setzt aber voraus, daß die Umschaltung $C_s$-Kanal <--> $C_f$-Kanal für die DLC-Schicht lückenlos ist und der exakte Umschaltpunkt auch für den Empfänger erkennbar ist.

Die DLC-Schicht im Sendeteil gibt nach Start eines Rahmens in der zweiten Warteschlange WSS eine Rahmenlänge L vor, muss aber damit rechnen, dass innerhalb des Rahmens auf die dritte Warteschlange WSF umzuschalten ist und dass der Rahmen dort im B-Feld-Format abzuschließen ist. Für diesen Fall speichert er L und alle bereits an die zweite Warteschlange WSS übergebenen Daten und kann daraus den Rahmenabschluss (Füll-Oktetts, Prüfsumme) nach B-Feld-Regeln bilden.

Zur Steuerung der für die DLC-Schicht lückenlosen Umschaltung kann eine Erweiterung der bisher standardisierten Funktionen der MAC-Schicht benutzt werden. Diese Erweiterung betrifft das A-Feld wie folgt (s. ETS 300 175-3, 7.2.5 insbesondere 7.2.5.3 ff.).

- Im MAC-Nachrichtenkopf wird eine der noch freien Codepunkte mit dem MAC-Kommandotyp "Umschaltung $C_s$-Kanal /$C_f$-Kanal" belegt.
- Der Rest des A-Feldes enthält unter diesem Kommando im Wesentlichen folgende Informationen:
- Referenz der MAC-Verbidungen, zwischen denen die $C_s$-Kanal / $C_f$-Kanal -Umschaltung erfolgen soll (verwendet wird die bereits definierte ECN; **E**xchanged **C**onnection **N**umber).
- Spezifische Umschaltkommando $C_s$-Kanal --> $C_f$-Kanal / $C_f$-Kanal --> $C_s$-Kanal.
- Quittung: Umschaltung akzeptiert/nicht akzeptiert, Bestätigung des korrekten Empfangs des Kommandos "Quittung".
- Leerfeld (Wartefunktion zu verwenden, wenn nicht unmittelbar quittiert werden kann).

Das B-Feld der Zeitschlitze mit diesen MAC-Steuerinformationen trägt entweder Benutzerinformationen (U-Ebene) falls der $C_s$-Kanal verwendet wird oder die Signalisierungsinformation selbst bzw. keine Information bei Verwendung des $C_s$-Kanals.

Die Umschaltung im I-Rahmen läuft nach einem Schema ähnlich dem vorstehend in Punkt"a)" skizzierten ab:

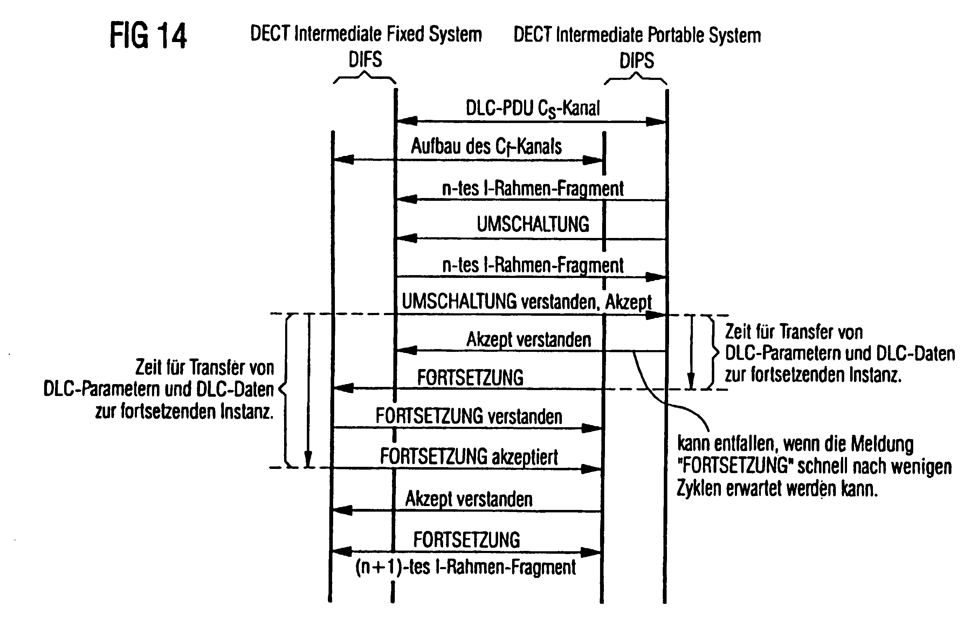

**$C_s$-Kanal -- > $C_f$-Kanal** gemäß FIGUR 14

Die initiierende Telekommunikationsschnittstelle DIFS, DIPS sendet auf dem $C_s$-Kanal nach Aufbau der MAC-Verbindung für den $C_f$-Kanal anstelle eines I-Rahmen-Segments das Umschaltekommando $C_s$-Kanal --> $C_f$-Kanal. Die Gegenseite quittiert auf dem $C_s$-Kanal den Akzept (einen Grund zur Rückweisung gibt es in diesem Fall nicht). Dann setzen beide Telekommunikationsschnittstellen DIFS, DIPS die Übertragung auf dem $C_f$-Kanal fort.

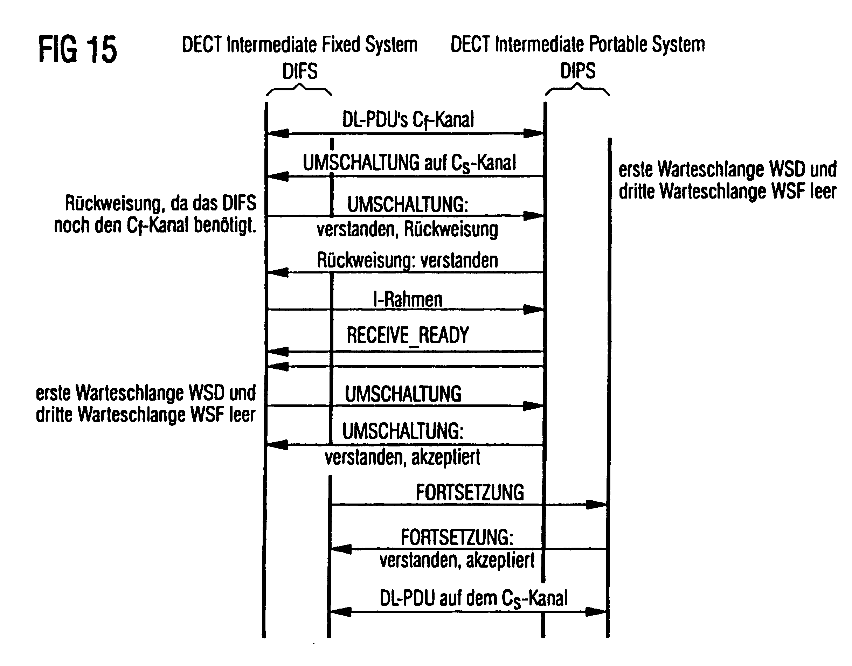

**$C_f$-Kanal --> $C_s$-Kanal** gemäß FIGUR 15

Wenn die den $C_f$-Kanal initiierende Telekommunikationsschnittstelle DIFS, DIPS diesen Kanal nicht mehr benötigt, sendet sie auf dem $C_f$-Kanal das Umschaltkommando $C_f$-Kanal --> $C_s$-Kanal. Benötigt auch die Gegenseite diesen Kanal zu diesem Zeitpunkt nicht mehr (WSD, WSF leer), quittiert sie den Akzept der Rückschaltung. Andernfalls weist sie die Rückschaltung zurück und übernimmt damit ihrerseits die Initiative zum erneuten Anstoß der Rückschaltung, wenn sie den $C_f$-Kanal nicht mehr benötigt. Solange der $C_f$-Kanal aktiv ist, kann er auch von der Gegenseite wieder benutzt werden.

### Anmerkung

Das Verfahren kann natürlich auch an I-Frame-Grenzen verwendet werden.

Dabei gibt es zwei Möglichkeiten:

- MAC-Kommandos und Quittungen werden an DLC-Rahmengrenzen angewendet, d.h. gesendet.
- MAC-Kommandos und Quittungen werden präventiv bereits in laufende Übertragungen von DLC-Rahmen eingeblendet, der Zeitpunkt der Wirksamkeit jedoch auf DLC-Rahmenenden definiert.

Damit ergibt sich der Vorteil eines Zeitgewinns, weil Verhandlungen und ggf. Folgeoperationen bereits parallel zu einer noch laufenden Übertragung stattfinden können.

### Sonstiges

- Der $C_f$-Kanal kann nach DECT-Regeln bei Bedarf von beiden Telekommunikationsschnittstellen DIFS, DIPS aufgebaut werden. Kollisionen sollen dabei zu einem gemeinsamen Kanal führen.
- Bei Kollision zwischen Aufbau und Abbau hat der Abbau Vorrang.
- Die Verwendung des $C_f$-Kanals kann zusätzlich auch durch andere Kriterien stimuliert werden.

**Patentansprüche**

1. Verfahren zur Steuerung des Wechsels von Telekommunikationskanälen eines in einem Telekommunikationssystem als lokale Nachrichtenübertragungsschleife eingebundenen Telekommunikationsteilsystems, insbesondere eines in einem ISDN-System eingebundenen DECT-spezifischen RLL/WLL-Teilsystems, wobei

a) in dem Telekommunikationssystem (I-TTS) Systeminformationen übertragen werden,
b) dem Telekommunikationsteilsystem (RW-TTS, DIIS) mehrere Teilsystemkanäle ($C_s$, $C_f$) zur Übertragung von Teilsysteminformationen und der Systeminformationen zugewiesen werden,
c) dem Telekommunikationsteilsystem (RW-TTS, DIIS) zwei Telekommunikationsschnittstellen (DIFS, DIPS) zugewiesen werden, die zumindest über einen Teilsystemkanal ($C_x$) der Teilsystemkanäle ($C_s$, $C_f$) miteinander verbunden sind,
d) das Telekommunikationsteilsystem (RW-TTS, DIIS) über die beiden Telekommunikationsschnittstellen (DIFS, DIPS) in das Telekommunikationssystem (I-TTS) eingebunden wird,
e) auf dem Teilsystemkanal ($C_x$) der Teilsystemkanäle ($C_s$, $C_f$) die Informationen übertragen werden,
**dadurch gekennzeichnet, dass**
f) ein Umschaltkommando (SWITCHING_REQUEST, ATTRIBUTE_REQUEST, SUSPEND) übertragen wird, mit dem eine der beiden Telekommunikationsschnittstellen (DIFS, DIPS) der anderen Telekommunikationsschnittstelle (DIFS, DIPS) signalisiert, dass die Informationen auf einem anderen Teilsystemkanal ($C_y$) der Teilsystemkanäle ($C_s$, $C_f$) übertragen werden sollen,
g) eine Umschaltantwort (SWITCHING_CONFIRM, ATTRIBUTE_CONFIRM, RESUME) von der das Umschaltkommando empfangenden Telekommunikationsschnittstelle (DIFS, DIPS) zu der das Umschaltkommando sendenden Telekommunikationsschnittstelle (DIFS, DIPS) übertragen wird,
h) die Übertragung des Umschaltkommandos (SWITCHING_REQUEST, ATTRIBUTE_REQUEST) durch das Ergebnis aus einer Analyse der in dem Telekommunikationsteilsystem (RW-TTS, DIIS) zu übertragenden Informationen durch mindestens eine der beiden Telekommunikationsschnittstellen (DIFS, DIPS) stimuliert wird.

2. Verfahren nach Anspruch 1, **dadurch gekennzeich- net, dass**
das Ergebnis der Analyse darin besteht, dass auf dem Teilsystemkanal ($C_x$) für eine vorgegebene Zeitdauer keine Informationen zwischen den Telekommunikationsschnittstellen (DIFS, DIPS) übertragen worden sind.

3. Verfahren nach Anspruch 1 oder 2, **dadurch gekenn - zeichnet, dass**
das Umschaltkommando (SWITCHING_REQUEST, ATTRIBUTE_REQUEST) erneut übertragen wird, wenn die Umschaltantwort (SWITCHING_CONFIRM, ATTRIBUTE_CONFIRM) nach einer vorgegebenen Zeitdauer nicht übertragen wird.

4. Verfahren nach Anspruch 3, **dadurch gekennzeich - net, dass**
das Umschaltkommando (SWITCHING_REQUEST, ATTRIBUTE_REQUEST) beim wiederholten Ausbleiben der Umschaltantwort (SWITCHING_CONFIRM, ATTRIBUTE_CONFIRM) für eine vorgegebene Anzahl weiter übertragen wird, bevor die Steuerung des Kanalwechsels für unbestimmte Zeit abgebrochen wird.

5. Verfahren nach Anspruch 1 bis 4, **dadurch gekenn - zeichnet, dass**
die Umschaltantwort (SWITCHING_CONFIRM, ATTRIBUTE_CONFIRM) eine Umschaltbestätigung ist, mit dem die das Umschaltkommando empfangende Telekommunikationsschnittstelle (DIFS, DIPS) der das Umschaltkommando sendenden Telekommunikationsschnittstelle (DIFS, DIPS) signalisiert, dass die Informationen auf dem anderen Teilsystemkanal ($C_y$) übertragen werden.

6. Verfahren nach einem der Ansprüche 1 bis 5, **dadurch gekennzeichnet, dass**
vor, mit oder nach der Übertragung des Umschaltkommandos (SWITCHING_REQUEST, ATTRIBUTE_REQUEST) die Übertragung der Informationen unterbrochen wird und dass mit oder nach der Übertragung der Umschaltantwort (SWITCHING_CONFIRM, ATTRIBUTE_CONFIRM) die Übertragung der Informationen wieder aufgenommen wird.

7. Verfahren nach Anspruch 6, **dadurch gekennzeich - net, dass**
unmittelbar nach der Übertragung des Umschaltkommandos (SWITCHING_REQUEST, ATTRIBUTE_REQUEST) die Übertragung der Informationen unterbrochen wird und dass im wesentlichen unmittelbar nach der Übertragung des Umschaltkommandos (SWITCHING_REQUEST, ATTRIBUTE_REQUEST) die Umschaltantwort (SWITCHING_CONFIRM, ATTRIBUTE_CONFIRM) übertragen wird.

8. Verfahren nach Anspruch 6, **dadurch gekennzeich - net, dass**
unmittelbar nach der Übertragung des Umschaltkommandos (SWITCHING_REQUEST, ATTRIBUTE_REQUEST) die Übertragung der Informationen durch die das Umschaltkommando (SWITCHING_REQUEST, ATTRIBUTE_REQUEST) sendende Telekommunikationsschnittstelle (DIFS, DIPS) unterbrochen wird, dass im wesentlichen unmittelbar nach der Übertragung des Umschaltkommandos (SWITCHING_REQUEST, ATTRIBUTE_REQUEST) die Übertragung der Informationen durch die das Umschaltkommando (SWITCHING_REQUEST, ATTRIBUTE_REQUEST) empfangende Telekommunikationsschnittstelle (DIFS, DIPS) dann unterbrochen wird, wenn von dieser Telekommunikationsschnittstelle (DIFS, DIPS) ein in sich abgeschlossenes Informationspaket abschließend übertragen worden ist und dass im Wesentlichen unmittelbar nach der Übertragung des Informationspakets die Umschaltantwort (SWITCHING_CONFIRM, ATTRIBUTE_CONFIRM) übertragen wird.

9. Verfahren nach Anspruch 6, **dadurch gekennzeich - net, dass**
unmittelbar nach der Übertragung des Umschaltkommandos (SWITCHING_REQUEST, ATTRIBUTE_REQUEST) die Übertragung der Informationen durch die das Umschaltkommando (SWITCHING_REQUEST, ATTRIBUTE_REQUEST) sendende Telekommunikationsschnittstelle (DIFS, DIPS) unterbrochen wird, dass im wesentlichen unmittelbar nach der Übertragung des Umschaltkommandos (SWITCHING_REQUEST, ATTRIBUTE_REQUEST) die Übertragung der Informationen durch die das Umschaltkommando (SWITCHING_REQUEST, ATTRIBUTE_REQUEST) empfangende Telekommunikationsschnittstelle (DIFS, DIPS) nach einer vorgegebenen Zeitdauer zur Bestätigung bereits empfangener Informationen unterbrochen wird und dass im wesentlichen unmittelbar nach der Übertragung der Bestätigung die Umschaltantwort (SWITCHING_CONFIRM, ATTRIBUTE_CONFIRM) übertragen wird.

10. Verfahren nach einem der Ansprüche 1 bis 9, **dadurch gekennzeichnet, dass**
nach der Übertragung der Umschaltantwort und vor der Übertragung der Systeminformationen auf dem anderen Teilsystemkanal ($C_y$) vorgegebene teilsystemspezifische Parameter zurückgesetzt werden.

11. Verfahren nach einem der Ansprüche 1 bis 10, **dadurch gekennzeichnet, dass**
auf dem anderen Teilsystemkanal ($C_y$) nach einem Kanalwechsel eine Testnachricht mit Aufforderung zur Bestätigung gesendet wird.

12. Verfahren nach Anspruch 11, **dadurch gekennzeich - net, dass**
die Testnachricht eine RECEIVE_READY-Meldung ist, die als Kommando (COMMAND) gesendet wird und dass die Bestätigung eine RECEIVE_READY-Meldung ist, die als Antwort (RESPONSE) gesendet wird.

13. Verfahren nach einem der Ansprüche 6, 7 oder 9, **dadurch gekennzeichnet, dass**
ein durch die unmittelbare Unterbrechung unvollständig übertragenes oder unbeantwortetes Informationspaket der zu übertragenden Informationen auf dem anderen Teilsystemkanal ($C_y$) nach einem Kanalwechsel erneut übertragen wird.

14. Verfahren nach einem der Ansprüche 1 bis 13, **dadurch gekennzeichnet, dass**
die Informationen nach einem vorgegebenen Übertragungsprinzip mit einer vorgegebenen Übertragungssequenz (k =3) übertragen werden und dass die Informationen auf dem anderen Teilsystemkanal ($C_y$) nach einem Kanalwechsel mit einer kleinstmöglichen Übertragungssequenz (k =1) übertragen werden.

15. Verfahren nach Anspruch 14, **dadurch gekennzeich- net, dass**
das Übertragungsprinzip mit der vorgegebenen Übertragungssequenz das HDLC-Protokoll zur Übertragung von HDLC-Rahmen ist.

16. Verfahren nach einem der Ansprüche 1 bis 15, **dadurch gekennzeichnet, dass**
Systemnachrichten mit Nutzinformationen und/oder den Systeminformationen und/oder die Teilsysteminformationen zwischen den Telekommunikationsschnittstellen (DIFS, DIPS) des Telekommunikationsteilsystems (RW-TTS, DIIS) auf Übertragungswegen mit unterschiedlichen Kennungen (LCNx, LCNy, LCNz) übertragen werden.

17. Verfahren nach Anspruch 16, **dadurch gekennzeich- net, dass**
einem ersten Übertragungsweg, dem ein erster Teilsystemkanal ($C_f$) zugeordnet ist, eine erste Kennung zugewiesen wird, die durch andere Übertragungswege nicht belegt ist.

18. Verfahren nach Anspruch 17, **dadurch gekennzeich - net, dass**
die erste Kennung die jeweils kleinste vergebbare Kennung von den die Übertragungswege kennzeichnenden Kennungen (LCNx, LCNy, LCNz) ist.

19. Verfahren nach Anspruch 17, **dadurch gekennzeich- net, dass**
die erste Kennung die jeweils größte vergebbare Kennung von den die Übertragungswege kennzeichnenden Kennungen (LCNx, LCNy, LCNz) ist.

**20.** Verfahren nach einem der Ansprüche 1 bis 19, **dadurch gekennzeichnet, dass** dem einen Teilsystemkanal ($C_x$) und dem anderen Teilsystemkanal ($C_y$) unterschiedliche Übertragungskapazitäten zugewiesen werden.

**21.** Verfahren nach einem der Ansprüche 1 bis 19, **dadurch gekennzeichnet, dass** dem einen Teilsystemkanal ($C_x$) und dem anderen Teilsystemkanal ($C_y$) gleiche Übertragungskapazitäten zugewiesen werden.

**22.** Verfahren nach einem der Ansprüche 1 bis 21, **dadurch gekennzeichnet, dass** das Umschaltkommando (SWITCHING_REQUEST, ATTRIBUTE_REQUEST) von einer ersten Telekommunikationsschnittstelle (DIFS) übertragen wird.

**23.** Verfahren nach einem der Ansprüche 17 bis 19 sowie nach Anspruch 20 und 22, **dadurch gekennzeichnet, dass** der erste Teilsystemkanal ($C_f$) bezüglich der Übertragungskapazität größer als ein zweiter Teilsystemkanal ($C_s$) ist, dass der erste Teilsystemkanal ($C_f$) dem ersten Übertragungsweg mit der ersten Kennung und der zweite Teilsystemkanal ($C_s$) einem zweiten Übertragungsweg mit einer zweiten Kennung zugeordnet ist und dass von dem ersten Teilsystemkanal ($C_f$) zum zweiten Teilsystemkanal ($C_s$) gewechselt wird, indem

a) ein Umschaltkommando (SWITCHING_REQUEST, ATTRIBUTE_REQUEST) von der ersten Telekommunikationsschnittstelle (DIFS) zu einer zweiten Telekommunikationsschnittstelle (DIPS) übertragen wird, mit dem die erste Telekommunikationsschnittstelle (DIFS) der zweiten Telekommunikationsschnittstelle (DIPS) signalisiert, dass die Informationen auf dem zweiten Teilsystemkanal ($C_s$) übertragen werden sollen,
b) eine Umschaltantwort (SWITCHING_CONFIRM, ATTRIBUTE_CONFIRM) von der zweiten Telekommunikationsschnittstelle (DIPS) zur ersten Telekommunikationsschnittstelle (DIFS) übertragen wird.

**24.** Verfahren nach einem der Ansprüche 17 bis 19 sowie nach Anspruch 21 und 22, **dadurch gekennzeichnet, dass** ein zweiter Teilsystemkanal ($C_s$) bezüglich der Übertragungskapazität gleich einem dritten Teilsystemkanal ($C_s$) ist, dass der zweite Teilsystemkanal ($C_s$) einem zweiten Übertragungsweg mit einer zweiten Kennung und der dritte Teilsystemkanal ($C_s$) einem dritten Übertragungsweg mit einer dritten Kennung zugeordnet ist und dass von dem zweiten Teilsystemkanal ($C_s$) zum dritten Teilsystemkanal ($C_s$) gewechselt wird, indem

a) ein Umschaltkommando (SWITCHING_REQUEST, ATTRIBUTE_REQUEST) von der ersten Telekommunikationsschnittstelle (DIFS) zur zweiten Telekommunikationsschnittstelle (DIPS) übertragen wird, mit dem die erste Telekommunikationsschnittstelle (DIFS) der zweiten Telekommunikationsschnittstelle (DIPS) signalisiert, dass die Informationen auf dem dritten Teilsystemkanal ($C_s$) übertragen werden sollen,
b) eine Umschaltantwort (SWITCHING_CONFIRM, ATTRIBUTE_CONFIRM) von der zweiten Telekommunikationsschnittstelle (DIPS) zur ersten Telekommunikationsschnittstelle (DIFS) übertragen wird.

**25.** Verfahren nach einem der Ansprüche 17 bis 19 sowie nach Anspruch 20 und 22, **dadurch gekennzeichnet, dass** der erste Teilsystemkanal ($C_f$) bezüglich der Übertragungskapazität größer als ein zweiter Teilsystemkanal ($C_s$) ist, dass der zweite Teilsystemkanal ($C_s$) einem zweiten Übertragungsweg mit einer zweiten Kennung zugeordnet ist, dass der erste Übertragungsweg mit der ersten Kennung für den ersten Teilsystemkanal ($C_f$) aufgebaut wird und dass von dem zweiten Teilsystemkanal ($C_s$) zum ersten Teilsystemkanal ($C_f$) gewechselt wird, indem

a) ein Umschaltkommando (SWITCHING_REQUEST, ATTRIBUTE_REQUEST) von der ersten Telekommunikationsschnittstelle (DIFS) zur zweiten Telekommunikationsschnittstelle (DIPS) übertragen wird, mit dem die erste Telekommunikationsschnittstelle (DIFS) der zweiten Telekommunikationsschnittstelle (DIPS) signalisiert, dass die Informationen auf dem ersten Teilsystemkanal ($C_f$) übertragen werden sollen,
b) eine Umschaltantwort (SWITCHING_CONFIRM, ATTRIBUTE_CONFIRM) von der zweiten Telekommunikationsschnittstelle (DIPS) zur ersten Telekommunikationsschnittstelle (DIFS) übertragen wird.

**26.** Verfahren nach Anspruch 25, **dadurch gekennzeich- net, dass** der Aufbau des ersten Übertragungsweges mit der ersten Kennung für den ersten Teilsystemkanal ($C_f$) durch die erste Telekommunikationsschnittstelle (DIFS) angestoßen wird.

**27.** Verfahren nach Anspruch 25, **dadurch gekennzeich- net, dass** der Aufbau des ersten Übertragungsweges mit der ersten Kennung für den ersten Teilsystemkanal ($C_f$) durch die zweite Telekommunikationsschnittstelle (DIPS) angestoßen wird.

**28.** Verfahren nach Anspruch 1 oder 2 oder Anspruch 1 und 6, **dadurch gekennzeichnet, dass**

das Umschaltkommando (SWITCHING_REQUEST, ATTRIBUTE_REQUEST) und/oder die Umschaltantwort (SWITCHING_CONFIRM, ATTRIBUTE_CONFIRM) jeweils von der jeweiligen das Umschaltkommando (SWITCHING_REQUEST, ATTRIBUTE_REQUEST) bzw. die Um-schaltantwort (SWITCHING_CONFIRM, AT-TRIBUTE_CONFIRM) empfangenden Telekommu-nikationsschnittstelle (DIFS, DIPS) quittiert wird.

29. Verfahren nach Anspruch 28, **dadurch gekennzeich- net, dass**
das Umschaltkommando (SWITCHING_REQUEST, ATTRIBUTE_REQUEST) und/oder die Umschaltantwort (SWITCHING_CONFIRM, AT-TRIBUTE_CONFIRM) ablehnend oder akzeptie-rend quittiert wird.

30. Verfahren nach Anspruch 29, **dadurch gekennzeichnet, dass**
im Fall der Ablehnung des Umschaltkommandos (SWITCHING_REQUEST, ATTRIBUTE_REQUEST) bzw. der Umschaltantwort (SWITCHING_ CONFIRM, ATTRIBUTE_CONFIRM) die die jewei-lige Ablehnung signalisierende Telekommunikati-onsschnittstelle (DIFS, DIPS) den Kanalwechsel mit der Übertragung des Umschaltkommandos (SWITCHING_REQUEST, ATTRIBUTE_REQUEST) anstoßen wird.

31. Verfahren nach Anspruch 29 oder 30, **dadurch ge-kennzeichnet, dass**
im Fall der Akzeptierung des Umschaltkommandos (SWITCHING_REQUEST, ATTRIBUTE_REQUEST) und der Umschaltantwort (SWITCHING_ CONFIRM, ATTRIBUTE_CONFIRM) die Übertragung der Informationen nach der Wiederaufnahme der Übertragung an der Stelle einsetzt, wo die Übertragung unterbrochen worden ist.

32. Verfahren nach Anspruch 1 oder 2, Anspruch 1 und 6 oder einem der Ansprüche 28 bis 31, **dadurch gekennzeich- net, dass**
das Umschaltkommando (SWITCHING_REQUEST, ATTRIBUTE_REQUEST) von einer ersten Telekommunikationsschnittstelle (DIFS) oder einer zweiten Telekommunikationsschnittstelle (DIPS) übertragen wird.

33. Verfahren nach Anspruch 1 oder 2, Anspruch 1 und 6 oder einem der Ansprüche 28 bis 32, **dadurch gekennzeich- net, dass**
das Umschaltkommando (SWITCHING_REQUEST, ATTRIBUTE_REQUEST) und die Um-schaltantwort (SWITCHING_CONFIRM, AT-TRIBUTE_CONFIRM) in einer ersten Nachrichtenübertragungsschicht (DLC-Schicht) einer in Nach-richtenübertragungsschichten eingeteilten Nachrichtenübertragungsstruktur der Telekommunikati-onsschnittstelle (DIFS, DIPS) übertragen werden, in der im wesentlichen die Teilsysteminformationen übertragen werden.

34. Verfahren nach Anspruch 1 oder 2, Anspruch 1 und 6 oder einem der Ansprüche 28 bis 32, **dadurch gekennzeich- net, dass**
das Umschaltkommando (SWITCHING_REQUEST, ATTRIBUTE_REQUEST) und die Um-schaltantwort (SWITCHING_CONFIRM, AT-TRIBUTE_CONFIRM) in einer zweiten Nachrichtenübertragungsschicht (MAC-Schicht) übertragen werden, die bezüglich einer in Nachrichtenübertra-gungsschichten eingeteilten Nachrichtenübertra-gungsstruktur der Telekommunikationsschnittstelle (DIFS, DIPS) einer für die Übertragung der Teilsysteminformationen im wesentlichen vorgesehenen ersten Nachrichtenübertragungsschicht (DLC-Schicht) untergeordnet ist und dass das Umschalt-kommando (SWITCHING_REQUEST, AT-TRIBUTE_REQUEST) und die Umschaltantwort (SWITCHING_CONFIRM, ATTRIBUTE_CONFIRM) dabei derart übertragen werden, dass die Da-tenstruktur der ersten Nachrichtenübertragungs-schicht (DLC-Schicht) unbeeinträchtigt bleibt.

35. Verfahren nach einem der Ansprüche 1 bis 34, **dadurch gekennzeichnet, dass**
ein ISDN-System als das Telekommunikationssystem (I-TTS) verwendet wird.

36. Verfahren nach Anspruch 35, **dadurch gekennzeich- net, dass**
die Systeminformationen auf dem D-Kanal übertragen werden.

37. Verfahren nach einem der Ansprüche 1 bis 36, **dadurch gekennzeichnet, dass**
ein DECT-System als das Telekommunikationsteilsystem (RW-TTS, DIIS) verwendet wird.

38. Verfahren nach einem der Ansprüche 1 bis 36, **dadurch gekennzeichnet, dass**
ein GSM-System als das Telekommunikationsteilsystem (RW-TTS, DIIS) verwendet wird.

39. Verfahren nach einem der Ansprüche 1 bis 36, **dadurch gekennzeichnet, dass**
ein PHS-System, ein WACS-System oder ein PACS-System als das Telekommunikationsteilsystem (RW-TTS, DIIS) verwendet wird.

40. Verfahren nach einem der Ansprüche 1 bis 36, **dadurch gekennzeichnet, dass**
ein "IS-54"-System oder ein PDC-System als das Telekommunikationsteilsystem (RW-TTS, DIIS) verwendet wird.

**41.** Verfahren nach einem der Ansprüche 1 bis 36, **dadurch gekennzeichnet, dass**
ein CDMA-System, ein TDMA-System, ein FDMA-System oder ein - bezüglich dieser genannten Übertragungsstandards - hybrides System als das Telekommunikationsteilsystem (RW-TTS, DIIS) verwendet wird.

**42.** Verfahren nach Anspruch 37, **dadurch gekennzeich** - **net, dass**
ein **D**ECT **I**NTERMEDIATE **F**IXED **S**YSTEM (DIFS) als die erste Telekommunikationsschnittstelle (DIFS) und ein **D**ECT **I**NTERMEDIATE **P**ORTABLE **S**YSTEM (DIPS) als die zweite Telekommunikationsschnittstelle (DIPS) verwendet werden.

**43.** Verfahren nach Anspruch 37, **dadurch gekennzeich- net, dass**
der $C_f$-Kanal des DECT/GAP-Systems (DGS) als der eine Teilsystemkanal ($C_x$) oder als der andere Teilsystemkanal ($C_y$) bzw. als der erste Teilsystemkanal ($C_f$) verwendet wird.

**44.** Verfahren nach Anspruch 37, **dadurch gekennzeich** - **net, dass**
der $C_s$-Kanal des DECT/GAP-Systems (DGS) als der eine Teilsystemkanal ($C_x$) oder als der andere Teilsystemkanal ($C_y$) bzw. als der zweite Teilsystemkanal ($C_s$) und der dritte Teilsystemkanal ($C_s$) verwendet wird.

**45.** Verfahren nach einem der Ansprüche 1 bis 28 und nach Anspruch 37, **dadurch gekennzeichnet, dass**
das ATTRIBUTE_REQUEST-Informationselement des DECT-Standards als das Umschaltkommando (SWITCHING_REQUEST, ATTRIBUTE_REQUEST) verwendet wird.

**46.** Verfahren nach einem der Ansprüche 1 bis 28 oder Anspruch 45 und nach Anspruch 37, **dadurch gekennzeichnet, dass**
das ATTRIBUTE_CONFIRM-Informationselement des DECT-Standards als die Umschaltantwort (SWITCHING_CONFIRM, ATTRIBUTE_CONFIRM) verwendet wird.

**47.** Verfahren nach Anspruch 1 oder 2, Anspruch 1 und 6 oder einem der Ansprüche 28 bis 34 und nach Anspruch 37, **dadurch gekennzeichnet, dass**
das SUSPEND-Informationselement des DECT-Standards als das Umschaltkommando (SWITCHING_REQUEST, ATTRIBUTE_REQUEST) verwendet wird.

**48.** Verfahren nach Anspruch 1 oder 2, Anspruch 1 und 6, einem der Ansprüche 28 bis 34 oder Anspruch 47 und nach Anspruch 37, **dadurch gekennzeichnet, dass**
das RESUME-Informationselement des DECT-Standards als die Umschaltantwort (SWITCHING_CONFIRM, ATTRIBUTE_CONFIRM) verwendet wird.

**49.** Verfahren nach Anspruch 33, **dadurch gekennzeichnet, dass**
die DLC-Schicht (**D**ata **L**ink **C**ontrol) des DECT-Standards als die erste Nachrichtenübertragungsschicht verwendet wird.

**50.** Verfahren nach Anspruch 34, **dadurch gekennzeich- net**, **dass**
die MAC-Schicht (**M**edium **A**ccess **C**ontrol) des DECT-Standards als die zweite Nachrichtenübertragungsschicht verwendet wird.

**FIG 1**

RLL/WLL-Telekommunikationsteilsystem RW-TTS

DECT/ISDN Intermediate System DIIS

DECT-Luftschnittstelle

DIFS

DIPS

Telekommunika-tionssystem

ISDN

Netzabschluß

NT

Schnittstellen-schaltung

Anpassungs-einheit

Funk-Festteil

RFP

RPP

Funk-Mobilteil

Anpassungs-einheit

Schnittstellen-schaltung

Endgerät

Benutzer

TCU

TE

INC1   IWU1

DECT/GAP-System DGS

IWU2   INC2

U-Schnittstelle

S-Schnittstelle (S-BUS)

S-Schnittstelle (S-BUS)

ISDN-Telekommunikationsteilsystem I-TTS

ISDN-Telekommunikationsteilsystem I-TTS

"ISDN ←→ DECT-spezifisches RLL/WLL"-Telekommunikationssystem IDRW-TS

EP 1 635 601 A2

EP 1 635 601 A2

| | 160ms | | | | | | | | | | | | | | | |
|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 |
| Multi-Zeitrahmen | PN | MCN | PN | MCN | PN | MCN | PN | MCN | Q | MCN | PN | MCN | PN | MCN | N | MCN | }Basisstation RFP |
| MZR | MCN | N | MCN | N | MCN | N | MCN | N | MCN | N | MCN | N | MCN | N | MCN | N | }Mobilteil RPP |

**Zeitrahmen ZR** — 10ms

RFP → RPP                    RPP → RFP

| Zeitschlitz 0 | Zeitschlitz 1 | · — · — · | Zeitschlitz 11 | Zeitschlitz 12 | Zeitschlitz 13 | · — · — · | Zeitschlitz 23 |

**Zeitschlitz ZS** — 417µs

| 32Bit / 28µs | 388Bit / 337µs | 4Bit / 3µs | 56Bit / 49µs |
|---|---|---|---|
| Sync-Feld | D-Feld | Z-Feld | Guard-Time |

**D-Feld**

| 64Bit / 56µs | 320Bit / 278µs | 4Bit / 3µs |
|---|---|---|
| A-Feld | B-Feld | X-CRC |

**A-Feld**

| 8Bit | 40Bit | 16Bit |
|---|---|---|
| Header | C-/Q-/M-/N-/P-Kanaldaten | A-CRC |

FIG 2

# FIG 3

**TE**

| Applika-tionen |
|---|
| ISDN-Schicht 3 |
| ISDN-Schicht 2 |
| ISDN-Schicht 1 |

**DIPS**

| IWU-Schicht | |
|---|---|
| ISDN-Schicht 2 | NWK-Schicht |
| | DLC-Schicht |
| | MAC-Schicht |
| ISDN-Schicht 1 | PH-Schicht |

**DIFS**

| IWU-Schicht | |
|---|---|
| NWK-Schicht | ISDN-Schicht 2 |
| DLC-Schicht | |
| MAC-Schicht | |
| PH-Schicht | ISDN-Schicht 1 |

**ISDN**

| ISDN-Schicht 3 |
|---|
| ISDN-Schicht 2 |
| ISDN-Schicht 1 |

DECT-Luftschnittstelle

# FIG 4

EP 1 635 601 A2

| ISDN | DIFS | | DIPS | | TE |
|---|---|---|---|---|---|
| | IWU-Schicht | | IWU-Schicht | | |
| Sprach-darstellungs-schicht z.B. PCM | Sprach-darstellungs-schicht z.B. PCM | Sprach-darstellungs-schicht z.B. ADPCM | Sprach-darstellungs-schicht z.B. ADPCM | Sprach-darstellungs-schicht z.B. PCM | Sprach-darstellungs-schicht z.B. PCM |
| | | | | | |
| | | | | | |
| | | DLC-Schicht | DLC-Schicht | | |
| | | MAC-Schicht | MAC-Schicht | | |
| ISDN-Schicht 1 | ISDN-Schicht 1 | PH-Schicht | PH-Schicht | ISDN-Schicht 1 | ISDN-Schicht 1 |

DECT-Luftschnittstelle

# FIG 5

IWU-Schicht
NWK-Schicht

Lower Layer Management Entity LLME

DATA LINK SERVICE

C-PLANE ROUTER

DLC-Layer entity    C-Plane    Protocol

DLC-Schicht

C$_f$-Kanal    C$_S$-Kanal    C$_S$-Kanal

Multi Bearer Control
MBC mit der
Logical Connection
Number
LCNx, LCN0

Multi Bearer Control
MBC mit der
Logical Connection
Number
LCNy, LCN1

Multi Bearer Control
MBC mit der
Logical Connection
Number
LCNz, LCN2

MAC-Schicht

Trafic Bearer Control
TBC

Trafic Bearer Control
TBC

Trafic Bearer Control
TBC

# FIG 6a

DECT Intermediate Fixed System   DECT Intermediate Portable System

DIFS   DIPS

Der Kanal $C_x$ wird für Informationsübertragungen auf der C-Ebene (C-plane) verwendet.

Kanal $C_x$

[Übertragungsweg mit LCNx; k=3]

Der Kanal $C_x$ wird für Informationsübertragungen auf der C-Ebene (C-plane) verwendet.

Das DIFS erkennt die Notwendigkeit auf einen C-Kanal $C_y$ zu wechseln.

Kanal $C_y$

[Übertragungsweg mit LCNy; wobei LCNx+LCNy]

Das DIFS kann mit der Meldung "RECEIVE_READY" alle unbestätigten, vollständig empfangenen I-Rahmen (Informationen nach dem HDLC-Protokoll) bestätigen, falls kein weiterer I-Rahmen gesendet wird.

RECEIVE_READY (RESPONSE)

[I-Rahmen; k=3]

Vor, mit oder nach der Übertragung der Meldung "SWITCHING_REQUEST" kann die DIFS vorzugsweise die Informationsübertragung auf der C-Ebene unterbrechen.

SWITCHING_REQUEST

[Anfrage von Kanal $C_x$ auf Kanal $C_y$ zu wechseln]

Nach oder mit Erhalt der Meldung "SWITCHING_REQUEST" wird das DIPS vorzugsweise alle unvollständig empfangenen I-Rahmen löschen.

EP 1 635 601 A2

## FIG 6b

EP 1 635 601 A2

DECT Intermediate Fixed System  DECT Intermediate Portable System

DIFS          DIPS

RECEIVE_READY (RESPONSE)

[I-Rahmen; k=3]

Falls der Sender frei ist, kann das DIPS mit der Meldung "RECEIVE_READY" alle unbestätigten, vollständig empfangenen I-Rahmen (Informationen nach dem HDLC-Protokoll) bestätigen.

Das DIFS wird mit oder nach Erhalt der Meldung "SWITCHING_CONFIRM" vorzugsweise alle unbestätigten und unvollständig empfangenen I-Rahmen löschen.

SWITCHING_CONFIRM

[Bestätigung des Wechsels von Kanal $C_x$ auf Kanal $C_y$]

Das DIPS wird vorzugsweise alle Informationsübertragungen auf der C-Ebene unterbrechen und mit der Meldung "SWITCHING_CONFIRM" auf die Meldung "SWITCHING_REQUEST" im Sinne einer Bestätigung antworten.

Zurücksetzung von teilsystemspezifischen Parametern

Der Kanal $C_y$ wird für die Informationsübertragungen auf der C-Ebene verwendet.

Testnachricht [k=1; k=3]

Übertragung der gelöschten Informationen [k=1; k=3]

Der Kanal $C_y$ wird für die Informationsübertragungen auf der C-Ebene verwendet.

EP 1 635 601 A2

# FIG 7

DECT Intermediate Fixed System    DECT Intermediate Portable System

DIFS    DIPS

Der Kanal $C_f$ wird für Informationsübertragungen auf der C-Ebene verwendet.

Kanal $C_f$
[Übertragungsweg mit LCN0]

Der Kanal $C_s$ wird für Informationsübertragungen auf der C-Ebene nicht verwendet. Es wird aber U-Ebene genutzt.

Kanal $C_s$ + U-Ebene
[Übertragungsweg mit LCN1]

Das DIFS erkennt, daß der Kanal $C_f$ nicht mehr notwendig ist. Die LLME weiß, daß auf dem Übertragungsweg mit der LCN1 eine MAC-Verbindung besteht.

ATTRIBUTES_T_REQUEST
[LCN1, kein Kanal $C_f$]

Der TBC fragt die LLME nach der MAC-Verbindung auf dem Übertragungsweg mit der LCN1. Da diese besteht, kann der Wechsel erfolgen.

Die LLME speichert die LCN1. Der Kanal $C_s$ wird für die Informationsübertragung auf der C-Ebene verwendet.

ATTRIBUTES_T_CONFIRM
[LCN1, kein Kanal $C_f$]

Die LLME speichert die LCN. Der Kanal $C_s$ wird für die Informationsübertragung auf der C-Ebene verwendet.

Der Übertragungsweg mit der LCN0 ist nicht mehr erforderlich.

RELEASE

Kanal $C_s$
[Übertragungsweg mit LCN1]

# FIG 8

DECT Intermediate Fixed System    DECT Intermediate Portable System

DIFS      DIPS

Der Kanal $C_S$ wird für Informationsübertragungen auf der C-Ebene verwendet. Zusätzlich wird noch die U-Ebene genutzt.

Kanal $C_S$ + U-Ebene

[Übertragungsweg mit LCN1]

Kanal $C_{S'}$ + U-Ebene

[Übertragungsweg mit LCN2]

Der Kanal $C_{S'}$ wird für Informationsübertragungen auf der C-Ebene nicht genutzt. Es wird aber die U-Ebene verwendet.

Das DIFS erkennt, daß der Kanal $C_f$ nicht mehr notwendig ist. Die LLME weiß, daß auf dem Übertragungsweg mit der LCN2 eine MAC-Verbindung besteht.

ATTRIBUTES_T_REQUEST

[LCN2, kein Kanal $C_f$]

Der TBC fragt die LLME nach der MAC-Verbindung auf dem Übertragungsweg mit der LCN2. Da diese besteht, kann der Wechsel erfolgen.

Die LLME speichert die LCN2. Der Kanal $C_{S'}$ wird für die Informationsübertragung auf der C-Ebene verwendet.

ATTRIBUTES_T_CONFIRM

[LCN2, kein Kanal $C_f$]

Die LLME speichert die LCN. Der Kanal $C_{S'}$ wird für die Informationsübertragung auf der C-Ebene verwendet.

Der Übertragungsweg mit der LCN ist nicht mehr erforderlich.

RELEASE

Kanal $C_{S'}$

[Übertragungsweg mit LCN2]

EP 1 635 601 A2

# FIG 9a

DECT Intermediate Fixed System      DECT Intermediate Portable System

DIFS      DIPS

Der Kanal $C_S$ wird für Informations-übertragungen auf der C-Ebene verwendet. Zusätzlich wird die U-Ebene genutzt.

Kanal $C_S$ + U-Ebene

[Übertragungsweg mit LCN1]

Das DIFS erkennt, daß ein Kanal $C_f$ erforderlich ist. Die LLME weiß, daß kein Übertragungsweg mit einer LCN für den Kanal $C_f$ besteht.

ATTRIBUTES_T_REQUEST

[LCN0, Kanal $C_f$]

Der TBC fragt die LLME nach einer MAC-Verbindung auf dem Über-tragungsweg mit LCN0. Da diese nicht besteht, baut der LLME den Übertragungsweg mit der LCN auf.

Aufbau des Übertragungsweges mit LCN0 zur Informationsübertragung auf C-Ebene mit einem Kanal $C_f$

BEARER_REQUEST

[LCN0, Kanal $C_f$]

BEARER_CONFIRM

[LCN0, Kanal $C_f$]

weitere Meldungen

weitere Meldungen

EP 1 635 601 A2

## FIG 9b

DECT Intermediate Fixed System      DECT Intermediate Portable System

DIFS                     DIPS

Der TBC fragt die LLME nach
MAC-Verbindung auf dem Übertragungsweg mit der LCN0. Da diese
ja besteht, kann der Wechsel erfolgen.

ATTRIBUTES_T_REQUEST

[LCN0, Kanal $C_f$]

Die LLME speichert die LCN0. Der Kanal $C_f$
wird für die Informationsübertragungen
auf der C-Ebene verwendet.

ATTRIBUTES_T_CONFIRM

[LCN0, Kanal $C_f$]

Die LLME speichert die LCN.
Der Kanal $C_f$ wird für die
Informationsübertragungen
auf der C-Ebene verwendet.

Kanal $C_f$

[Übertragungsweg mit LCN0]

EP 1 635 601 A2

# FIG 10a

DECT Intermediate Fixed System    DECT Intermediate Portable System

DIFS                              DIPS

Der Kanal $C_S$ wird für Informationsübertragungen auf der C-Ebene verwendet.    Kanal $C_S$ + U-Ebene
Zusätzlich wird die U-Ebene genutzt.        [Übertragungsweg mit LCN1]

Das DIPS erkennt, daß ein Kanal $C_f$
erforderlich ist und baut den Übertragungsweg mit der LCN0 auf.

BEARER_REQUEST

[LCN0, Kanal $C_f$]

BEARER_CONFIRM

[LCN0, Kanal $C_f$]

weitere Meldungen

weitere Meldungen

Aufbau des Übertragungsweges mit LCN0 zur Informationsübertragung auf C-Ebene mit einem Kanal $C_f$

EP 1 635 601 A2

# FIG 10b

DECT Intermediate Fixed System     DECT Intermediate Portable System

DIFS               DIPS

Der TBC fragt die LLME nach der
MAC-Verbindung auf dem Übertragungsweg mit der LCNO.
Da diese jetzt besteht,
kann der Wechsel erfolgen.

Das DIFS erkennt, daß das DIPS
den $C_f$-Kanal benötigt.

**ATTRIBUTES_T_REQUEST**

[LCNO, Kanal $C_f$]

Die LLME speichert die LCNO. Der Kanal $C_f$
wird für die Informationsübertragungen
auf der C-Ebene verwendet.

**ATTRIBUTES_T_CONFIRM**

[LCNO, Kanal $C_f$]

Die LLME speichert die LCNO.
Der Kanal $C_f$ wird für die
Informationsübertragungen
auf der C-Ebene verwendet.

Kanal $C_f$

[Übertragungsweg mit LCNO]

EP 1 635 601 A2

# FIG 11

EP 1 635 601 A2

## FIG 12

EP 1 635 601 A2

DECT Intermediate Fixed System     DECT Intermediate Portable System

DIFS               DIPS

DLC-PDU $C_S$-Kanal

Aufbau des $C_f$-Kanals

SUSPEND

RECEIVE_READY

SUSPEND_ACKNOWLEDGE

Zeit für Transfer von DLC-Parametern, DLC-Daten zur fortsetzenden Instanz.

RESUME

Zeit für Transfer von DLC-Parametern und DLC-Daten zur fortsetzenden Instanz.

RESUME_ACKNOWLEDGE

Fortsetzung DLC-PDU

**FIG 13**

DECT Intermediate Fixed System        DECT Intermediate Portable System

DIFS        DIPS

DLC-PDU $C_S$-Kanal

RECEIVE_READY

SUSPEND

erste Warteschlange WSD und
dritte Warteschlange WSF leer

SUSPEND_REJECT

I-Rahmen

RECEIVE_READY

erste Warteschlange WSD und
dritte Warteschlange WSF leer

SUSPEND

SUSPEND_ACKNOWLEDGE

RESUME

RESUME_ACKNOWLEDGE

Fortsetzung auf $C_S$-Kanal

EP 1 635 601 A2

## FIG 14

DECT Intermediate Fixed System     DECT Intermediate Portable System

DIFS                    DIPS

DLC-PDU $C_S$-Kanal

Aufbau des $C_f$-Kanals

n-tes I-Rahmen-Fragment

UMSCHALTUNG

n-tes I-Rahmen-Fragment

UMSCHALTUNG verstanden, Akzept

Akzept verstanden

FORTSETZUNG

FORTSETZUNG verstanden

FORTSETZUNG akzeptiert

Akzept verstanden

FORTSETZUNG

(n+1)-tes I-Rahmen-Fragment

Zeit für Transfer von
DLC-Parametern und DLC-Daten
zur fortsetzenden Instanz.

Zeit für Transfer von
DLC-Parametern und DLC-Daten
zur fortsetzenden Instanz.

kann entfallen, wenn die Meldung
"FORTSETZUNG" schnell nach wenigen
Zyklen erwartet werden kann.

EP 1 635 601 A2

## FIG 15

DECT Intermediate Fixed System     DECT Intermediate Portable System

DIFS            DIPS

DL-PDU's $C_f$-Kanal

UMSCHALTUNG auf $C_S$-Kanal

erste Warteschlange WSD und dritte Warteschlange WSF leer

Rückweisung, da das DIFS noch den $C_f$-Kanal benötigt.

UMSCHALTUNG: verstanden, Rückweisung

Rückweisung: verstanden

I-Rahmen

RECEIVE_READY

erste Warteschlange WSD und dritte Warteschlange WSF leer

UMSCHALTUNG

UMSCHALTUNG: verstanden, akzeptiert

FORTSETZUNG

FORTSETZUNG: verstanden, akzeptiert

DL-PDU auf dem $C_S$-Kanal

EP 1 635 601 A2